# EUROPÄISCHE PATENTSCHRIFT

(11) **EP 3 755 589 B1**
(45) Veröffentlichungstag und Bekanntmachung des Hinweises auf die Patenterteilung: **22.12.2021**
(21) Anmeldenummer: 19706383.7
(22) Anmeldetag: 29.01.2019
(51) Int. Cl.: B60T 13/68

(54) **ELEKTROPNEUMATISCHE AUSRÜSTUNG EINES FAHRZEUGS**
ELECTROPNEUMATIC EQUIPMENT OF A VEHICLE
ÉQUIPEMENT ÉLECTROPNEUMATIQUE D'UN VÉHICULE

(30) Priorität: 19.02.2018 DE 102018103605
(43) Veröffentlichungstag der Anmeldung: 30.12.2020
(73) Patentinhaber: KNORR-BREMSE Systeme für Nutzfahrzeuge GmbH, 80809 München (DE)
(72) Erfinder: HECKER, Falk, 71706 Markgröningen (DE); JUNDT, Oliver, 74394 Hessigheim (DE); HERGES, Michael, 80935 München (DE)
(86) Internationale Anmeldenummer: PCT/EP2019/052049
(87) Internationale Veröffentlichungsnummer: WO 2019/158351

(56) Entgegenhaltungen:
- EP-B1- 2 090 481
- WO-A1-2016/116241
- WO-A2-2004/098967
- DE-A1-102015 206 572

## Beschreibung

Die Erfindung betrifft eine elektropneumatische Ausrüstung eines Fahrzeugs, gemäß dem Oberbegriff von Anspruch 1 sowie ein Fahrzeug mit einer solchen elektropneumatischen Ausrüstung gemäß Anspruch 31.

Eine solche elektropneumatische Ausrüstung eines Fahrzeugs ist beispielsweise aus WO2015154787 A1 bekannt.

EP 2 090 481 B1 offenbart ein elektronisch geregeltes Bremssystem, welches einen ersten elektrischen Bremssteuerkreis und einen zweiten elektrischen Bremssteuerkreis umfasst, wobei ohnehin vorhandene Komponenten für eine Druckmittelsteuerung von Bremsaktuatoren eingesetzt werden, welche von einem gestörten elektrischen Bremskreis nicht mehr angesteuert werden können.

Beim automatisierten Fahren muss die Fahrzeugsteuerung auch bei Auftreten eines Fehlers weiter funktionieren und zwar so lange, bis ein sicherer Zustand erreicht ist. Der sichere Zustand kann entweder durch Fahrerübernahme erreicht werden, oder durch Parken (Feststellbremsen) des Fahrzeugs im Stillstand und Aufrechterhalten des geparkten Zustands. Für die Automatisierungslevel 4 und 5 ist die Fahrerübernahme nicht akzeptabel, d.h. hier muss das autonome System selbst automatisch den sicheren Zustand ohne Fahrereingriff erreichen.

Im Fehlerfall kann das bedeuten, dass das autonome System die Fahraufgabe trotz Fehler noch für mehrere Minuten aufrecht halten muss, d.h. die elektronische Ansteuerung der Bremse muss auch bei Ausfall der Haupt-Bremssteuerung über mehrere Minuten funktionieren. Im Anschluss daran muss das Fahrzeug sicher geparkt werden können, d.h. die Park- oder Feststellbremse muss ebenfalls sicher funktionieren. Zusätzlich ist zu beachten, dass bei einer längeren Fahrdauer in einem Backup-Zustand ein weiterer Fehler auftreten könnte, so dass eine zweite Rückfallebene wünschenswert ist.

Der Erfindung liegt demzufolge die Aufgabe zugrunde, eine elektropneumatische Einrichtung eines Fahrzeugs derart weiter zu bilden, dass sie eine möglichst hohe Ausfallsicherheit bei geringem baulichen Aufwand zur Verfügung stellt. Auch soll ein Fahrzeug mit einer solchen elektropneumatischen Einrichtung zur Verfügung gestellt werden.

Diese Aufgabe wird erfindungsgemäß durch die Merkmale der Ansprüche 1 und 31 gelöst.

### Offenbarung der Erfindung

Die Erfindung geht aus von einer elektropneumatischen Ausrüstung eines Fahrzeugs beinhaltend
a) eine elektropneumatische Parkbremseinrichtung mit einer elektropneumatischen Parkbremssteuereinrichtung, wenigstens einem Druckluftvorrat und wenigstens einem pneumatischen Federspeicherbremszylinder, wobei
b) die elektropneumatische Parkbremssteuereinrichtung ein elektronisches Parkbremssteuergerät, eine wenigstens ein erstes Magnetventil und wenigstens ein von diesem druckgesteuertes Ventil umfassende erste Ventileinrichtung aufweist, bei welcher das wenigstens eine erste Magnetventil von dem elektronischen Parkbremssteuergerät gesteuert ist, wobei
c) ein pneumatischer Steuereingang des druckgesteuerten Ventils an das wenigstens eine erste Magnetventil angeschlossen ist und ein Arbeitsausgang des druckgesteuerten Ventils mit dem wenigstens einen Federspeicherbremszylinder in Verbindung bringbar ist, und wobei
d) das wenigstens eine erste Magnetventil weiterhin an den wenigstens einen Druckluftvorrat und an eine Drucksenke angeschlossen ist, wobei
e) das wenigstens eine erste Magnetventil ausgebildet ist, dass es abhängig von der Steuerung durch das elektronische Parkbremssteuergerät den pneumatischen Steuereingang des druckgesteuerten Ventils mit dem wenigstens einen Druckluftvorrat oder mit der Drucksenke verbindet, oder insbesondere im unbestromten Zustand eine solche Verbindung absperrt, und wobei
f) das druckgesteuerte Ventil ausgebildet ist, dass es bei einer Entlüftung seines pneumatischen Steuereingangs seinen Arbeitsausgang entlüftet und bei einer Belüftung seines pneumatischen Steuereingangs seinen Arbeitsausgang belüftet, sowie
g) beinhaltend eine wenigstens ein zweites Magnetventil aufweisende zweite Ventileinrichtung, welche an den pneumatischen Steuereingang des druckgesteuerten Ventils der ersten Ventileinrichtung angeschlossen und ausgebildet ist, dass sie abhängig von einer Bestromung oder Entstromung des wenigstens einen zweiten Magnetventils den pneumatischen Steuereingang des druckgesteuerten Ventils mit einer weiteren Drucksenke verbindet oder eine solche Verbindung sperrt.

Die Erfindung schlägt vor, dass
h) die elektropneumatische Parkbremssteuereinrichtung durch lediglich zwei voneinander unabhängige elektrische Energiequellen, einer ersten elektrischen Energiequelle und einer zweiten elektrischen Energiequelle mit elektrischer Energie versorgt ist, und dass
i) das wenigstens eine zweite Magnetventil der zweiten Ventileinrichtung durch lediglich die beiden voneinander unabhängigen elektrischen Energiequellen oder durch wenigstens zwei voneinander unabhängige elektronische Steuergeräte bestrombar oder entstrombar ist, von welchen ein erstes elektronisches Steuergerät und ein zweites elektronisches Steuergerät von einer jeweils anderen elektrischen Energiequelle der lediglich zwei voneinander unabhängigen elektrischen Energiequellen mit elektrischer Energie versorgt ist.

Mit anderen Worten sind lediglich zwei voneinander unabhängige Energiequellen vorgesehen, welche das wenigstens eine zweite Magnetventil der zweiten Ventileinrichtung entweder im Fall von intakten Energiequellen dauerhaft und direkt bestromen oder bei einem Ausfall einer elektrischer Energiequelle der lediglich zwei Energiequellen oder bei einem Ausfall beider Energiequellen entstromen. Dabei kann eine Verschaltung des wenigstens einen zweiten Magnetventils der zweiten Ventileinrichtung mit den beiden elektrischen Energiequellen vorliegen, dass eine Entstromung des wenigstens einen zweiten Magnetventils im Sinne einer "UND"-Schaltung lediglich dann zustande kommt, wenn beide elektrische Energiequellen ausgefallen sind.

Alternativ wird das wenigstens eine zweite Magnetventil der zweiten Ventileinrichtung durch die beiden elektronischen Steuergeräte durch Bestromen oder Entstromen beispielsweise im Sinne einer "ODER"-Schaltung gesteuert, wobei die beiden elektronischen Steuergeräte jeweils von einer der voneinander unabhängigen Energiequellen mit elektrischer Energie versorgt werden.

Weil ein pneumatischer Steuereingang des druckgesteuerten Ventils an das wenigstens eine erste Magnetventil angeschlossen ist und ein Arbeitsausgang des druckgesteuerten Ventils mit dem wenigstens einen Federspeicherbremszylinder in Verbindung bringbar ist, kann durch Belüften oder Entlüften des pneumatischen Steuereingangs des druckgesteuerten Ventils grundsätzlich ein Lösen oder Zuspannen des wenigstens einen Federspeicherzylinders hervorgerufen werden.

Weil das wenigstens eine zweite Magnetventil der zweiten Ventileinrichtung an den pneumatischen Steuereingang des druckgesteuerten Ventils der ersten Ventileinrichtung angeschlossen und die zweite Ventileinrichtung ausgebildet ist, dass sie abhängig von einer Bestromung oder Entstromung des wenigstens einen zweiten Magnetventils den pneumatischen Steuereingang des druckgesteuerten Ventils mit der weiteren Drucksenke verbindet oder eine solche Verbindung sperrt, kann in dem ungünstigsten Fall, dass beide elektrische Energiequellen (z. B. zeitlich nacheinander) ausfallen dennoch dafür gesorgt werden, dass über den dann durch die entstromte zweite Ventileinrichtung entlüfteten pneumatischen Steuereingang des druckgesteuerten Ventils der ersten Ventileinrichtung die Parkbremse automatisch zugespannt und das Fahrzeug dadurch in einen sicheren Parkzustand versetzt wird. Diese automatisch eintretende Funktionalität des Zuspannens des wenigstens einen Federspeicherbremszylinders bei einem Ausfall beider elektrischer Energiequellen kann in Fahrt oder auch im Stillstand stattfinden und ist lediglich von den Zeitpunkten des Eintretens der Ausfälle der beiden elektrischen Energieversorgungen abhängig.

Weil insbesondere bei Nutzfahrzeugen einschließlich Zugfahrzeug-Anhängerkombinationen sowie Schienenfahrzeugen Parkbremsen (auch Feststellbremsen genannt) in der Regel mit Federspeicherbremszylindern ausgestattet sind, die in Lösestellung eine Bremskammer mit Druckluft beaufschlagen und dadurch eine Speicherfeder gespannt halten, während zum Bremsen die Bremskammer entlüftet, d.h. mit Atmosphärendruck verbunden wird, so dass der Federspeicherbremszylinder unter Wirkung der Speicherfeder eine Bremskraft erzeugt, sorgt eine Entlüftung der Bremskammer für einen sicheren Parkzustand des Fahrzeugs infolge der Wirkung der Speicherfeder. Die Entlüftung der Bremskammer kann wie oben beschrieben durch die zweite Ventileinrichtung automatisch hervorgerufen werden, wenn beispielsweise beide elektrische Energiequellen (z. B. zeitlich nacheinander) ausfallen.

Generell soll jedoch ein automatisches Zuspannen der Federspeicherbremsen während der Fahrt des Fahrzeugs eine letzte zu ergreifende Sicherheitsmaßnahme darstellen, um Auffahrunfälle und instabiles Fahrverhalten zu vermeiden.

Daher ist im Rahmen einer in wenigstens einem elektronischen Steuergerät implementierten Steuerlogik vorgesehen, dass ein Zuspannen der Parkbremse bevorzugt lediglich im Stillstand des Fahrzeugs stattfindet, wenn beispielsweise nur eine der beiden elektrischen Energiequellen ausgefallen ist. Denn dann kann mit Hilfe der verbliebenen intakten elektrischen Energiequelle der Stillstand des Fahrzeugs detektiert und erst bei einem erfassten Fahrzeugstillstand die Parkbremse mit der noch zur Verfügung stehenden elektrischen Energie durch die elektropneumatische Parkbremssteuereinrichtung in den Zuspannzustand gesteuert werden.

Neben der elektropneumatischen Parkbremssteuereinrichtung können die beiden voneinander unabhängigen elektrischen Energiequellen zusätzlich auch jeweils einen Betriebsbremskreis einer beispielsweise elektropneumatischen Betriebsbremseinrichtung des Fahrzeugs mit elektrischer Energie versorgen und optional das wenigstens eine zweite Magnetventil der zweiten Ventileinrichtung direkt und dauerhaft bestromen. Hierfür sind daher lediglich zwei voneinander unabhängige elektrische Energiequellen vorgesehen und auch ausreichend, wobei bei einem Ausfall beider elektrischer Energiequellen wie oben beschrieben ein sicherer Zustand des Fahrzeugs durch dauerhaftes Zuspannen der Federspeicherbremse ermöglicht wird.

Voneinander unabhängige elektrische Energiequellen bedeutet daher, dass ein Ausfall einer der elektrischen Energiequellen die Funktionsfähigkeit der jeweils anderen elektrischen Energiequelle nicht beeinflussen kann. Dasselbe gilt auch für die voneinander unabhängigen elektronischen Steuergeräte ECU1 und ECU2.

Die Erfindung hat folglich den Vorteil, dass sie ohne Notwendigkeit einer dritten elektrischen Energieversorgung stets eine Redundanz in den Fällen zur Verfügung stellen kann, in denen ein Ausfall einer oder beider elektrischer Energiequelle(n) und/oder eines elektronischen Steuergeräts oder beider elektronischer Steuergeräte stattfindet. Weiterhin ist die Erfindung auch kostengünstig realisierbar, weil lediglich übliche Bauelemente wie Magnetventile verwendet werden.

Die Erfindung eignet sich daher gerade zum Einsatz für hoch automatisiertes Fahren insbesondere im Level 4 und 5, weil sie Redundanzen zur Verfügung stellt, welche ohne Eingreifen des Fahrers automatisch durchführbar sind. Die Erfindung ist allerdings nicht auf eine Anwendung Im Rahmen automatisierten Fahrens beschränkt. Vielmehr kann sie auch für einen durch den Fahrer stattfindenden Betrieb des Fahrzeugs angewendet werden.

Durch die in den Unteransprüchen aufgeführten Maßnahmen sind vorteilhafte Weiterbildungen und Verbesserungen der in Anspruch 1 angegebenen Erfindung möglich.

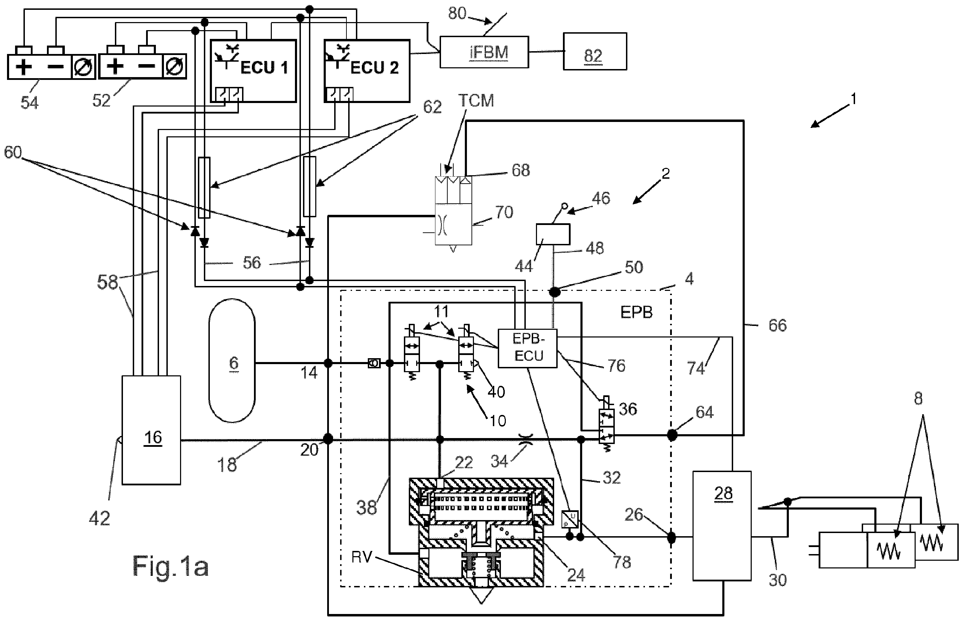

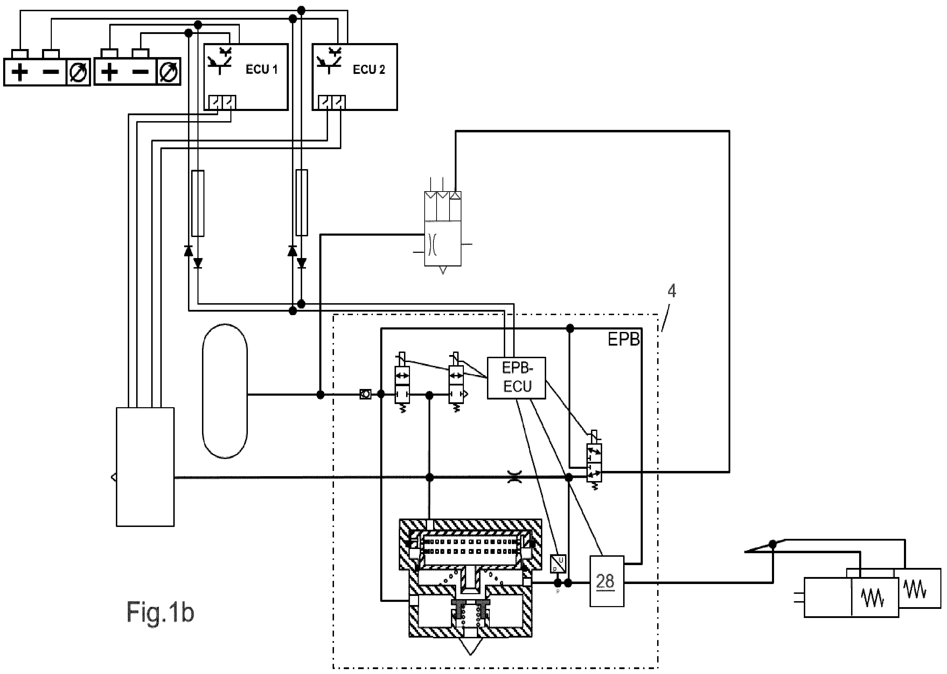

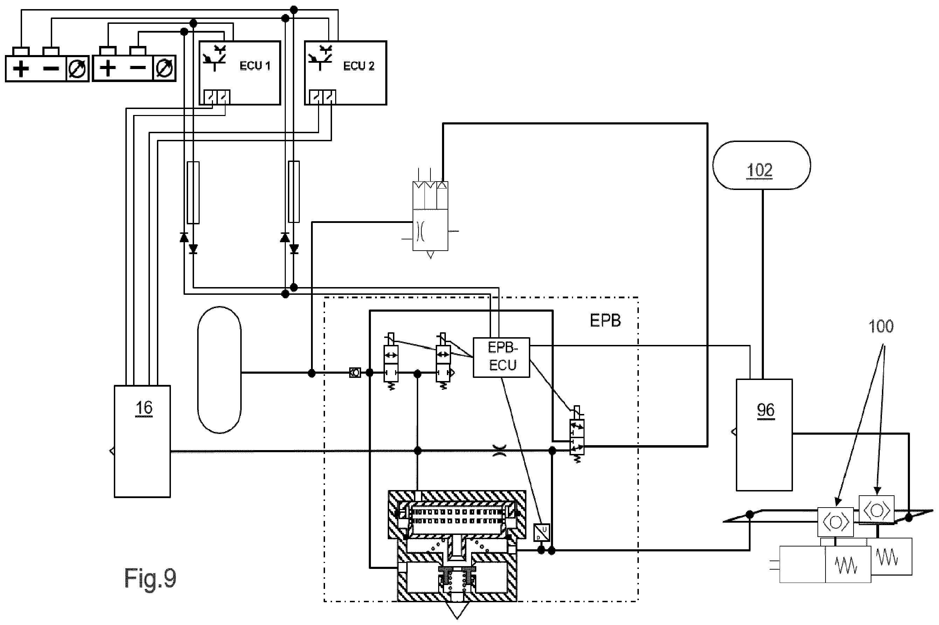

Wie in **Fig.1a****,** **Fig.1b** und **Fig.9** dargestellt, versorgen vorzugsweise die lediglich zwei voneinander unabhängigen elektrischen Energiequellen jeweils ein elektronisches Steuergerät ECU1 bzw. ECU2 mit elektrischer Energie, nämlich eine erste elektrische Energiequelle das erste elektronische Steuergerät ECU1 und eine zweite elektrische Energiequelle das zweite elektronische Steuergerät ECU2.

Gemäß den in **Fig.1a****,** **Fig.1b** und **Fig.9** dargestellten Ausführungsformen sind das erste elektronische Steuergerät ECU1 und das zweite elektronische Steuergerät ECU2 jeweils ausgebildet, dass ein Ausfall eines der elektronischen Steuergeräte ECU1 oder ECU2 die Funktionsfähigkeit des jeweils anderen elektronischen Steuergeräts ECU2 oder ECU1 nicht beeinflusst.

Es sind nun verschiedene Störfälle denkbar, in denen eine Komponente oder Baugruppe der elektropneumatischen Ausrüstung ausfällt und dann mit der Erfindung eine Redundanz zur Verfügung gestellt wird, auch ohne dass der Fahrer bzw. eine zusätzlich vorhandene Autopiloteinrichtung eingreifen muss.

Beispielsweise können erste Mittel zum Detektieren eines Ausfalls des elektronischen Parkbremssteuergeräts EPB-ECU und zweite Mittel zum Detektieren eines Fahrzustands des Fahrzeugs hinsichtlich Fahren oder Stillstand vorgesehen sein, wobei die ersten Mittel und die zweiten Mittel von wenigstens einer elektrischen Energiequelle der beiden voneinander unabhängigen Energiequellen mit elektrischer Energie versorgt sind.

Für eine sichere Bewältigung eines ersten Störfalls kann dann beispielsweise eine in wenigstens einem elektronischen Steuergerät implementierte Steuerlogik vorgesehen sein, welche Signale von den ersten Mitteln und den zweiten Mitteln empfängt und welche derart ausgebildet ist, dass sie bei einem detektierten Stillstand des Fahrzeugs und bei einem detektierten Ausfall des elektronischen Parkbremssteuergeräts EPB-ECU das erste elektronische Steuergerät ECU1 und/oder das zweite elektronische Steuergerät ECU2 derart steuert, dass diese(s) das wenigstens eine zweite Magnetventil der zweiten Ventileinrichtung steuern(t), um den pneumatischen Steuereingang des druckgesteuerten Ventils der Parkbremssteuereinrichtung mit der weiteren Drucksenke zu verbinden.

Bei einem Auftreten dieses ersten Störfalls (Ausfall des elektronischen Parkbremssteuergeräts EPB-ECU) kann das Fahrzeug dann beispielsweise mit Hilfe eines intakten Betriebsbremskreises automatisch oder durch den Fahrer in den Stillstand eingebremst werden und dann die Parkbremse, wenn der Stillstand des Fahrzeugs detektiert worden ist, mit Hilfe einer elektrischen Steuerung des wenigstens einen zweiten Magnetventils der zweiten Ventileinrichtung durch eines der elektronischen Steuergeräte ECU1 oder ECU2 oder durch beide elektronischen Steuergeräte ECU1 und ECU2 automatisch zugespannt werden.

Weiterhin können neben den ersten Mitteln zum Detektieren eines Ausfalls des elektronischen Parkbremssteuergeräts EPB-ECU, den zweiten Mitteln zum Detektieren eines Fahrzustands des Fahrzeugs hinsichtlich Fahren oder Stillstand noch dritte Mittel zum Detektieren eines Ausfalls des ersten elektronischen Steuergeräts ECU1 und/oder des zweiten elektronischen Steuergeräts ECU2 vorgesehen sein, wobei die ersten Mittel, die zweiten Mittel und die dritten Mittel beispielsweise von wenigstens einer elektrischen Energiequelle der beiden voneinander unabhängigen Energiequellen mit elektrischer Energie versorgt sind.

Für eine sichere Bewältigung eines zweiten Störfalls kann dann beispielsweise in wenigstens einem, von wenigstens einer elektrischen Energiequelle der beiden voneinander unabhängigen Energiequellen mit elektrischer Energie versorgten elektronischen Steuergeräte implementierte Steuerlogik vorgesehen sein, welche Signale von den ersten Mitteln, von den zweiten Mitteln und von den dritten Mitteln empfängt und welche derart ausgebildet ist, dass sie bei einem detektierten Stillstand des Fahrzeugs und bei einem detektierten Ausfall einerseits des ersten elektronischen Steuergeräts ECU1 oder des zweiten elektronischen Steuergeräts ECU2 und andererseits des elektronischen Parkbremssteuergeräts EPB-ECU das jeweils intakt verbliebene elektronische Steuergerät ECU1 oder ECU2 der beiden elektronischen Steuergeräte ECU1, ECU2 derart steuert, dass dieses intakt verbliebene elektronische Steuergerät ECU1 oder ECU2 das wenigstens eine zweite Magnetventil der zweiten Ventileinrichtung steuert, um den pneumatischen Steuereingang des druckgesteuerten Ventils mit der weiteren Drucksenke zu verbinden.

Dieser zweite Störfall betrifft daher beispielsweise einen Ausfall des (Haupt-) Betriebsbremskreises infolge des Ausfalls beispielsweise des ersten elektronischen Steuergeräts ECU1, welches diesen Betriebsbremskreis steuert und einen beispielsweise zeitlich nachfolgenden Ausfall des elektronischen Parkbremssteuergeräts EPB-ECU. Dann kann das Fahrzeug beispielsweise über das noch intakte zweite elektronische Steuergerät ECU2, welches einen redundanten Betriebsbremskreis steuert, automatisch oder durch den Fahrer bis in den Stillstand eingebremst und nach detektiertem Stillstand des Fahrzeugs dann die Parkbremse mit Hilfe einer elektrischen Steuerung des wenigstens einen zweiten Magnetventil der zweiten Ventileinrichtung durch das noch intakte zweite elektronische Steuergerät ECU2 automatisch zugespannt werden.

Der zweite Störfall kann natürlich auch in zeitlich umgekehrter Weise zuerst durch den Ausfall des elektronischen Parkbremssteuergeräts EPB-ECU und dann zeitlich nachfolgend durch den Ausfall des (Haupt-) Betriebsbremskreises gebildet werden, wobei die Steuerlogik dann in analoger Weise reagiert.

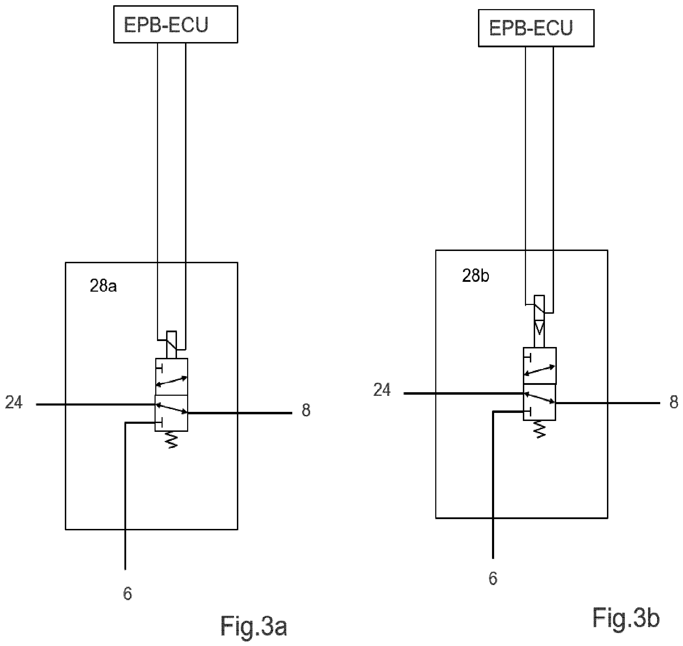

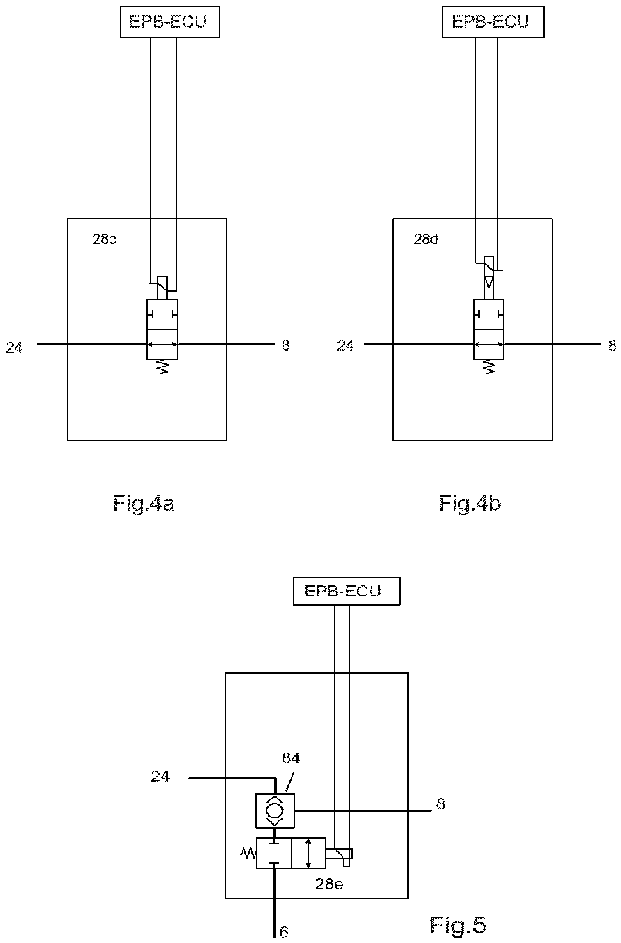

**Fig.1a****,** **Fig.1b****,** **Fig.3a, Fig.3b** und auch **Fig.5** zeigen noch eine dritte, wenigstens ein von dem elektronischen Parkbremssteuergerät EPB-ECU gesteuertes drittes Magnetventil aufweisende Ventileinrichtung, welche an den Arbeitsausgang des druckgesteuerten Ventils, an wenigstens einen Druckluftvorrat sowie an den wenigstens einen Federspeicherbremszylinder angeschlossen und ausgebildet ist, dass sie bei einer Entstromung des wenigstens einen dritten Magnetventils durch das elektronische Parkbremssteuergerät den wenigstens einen Federspeicherbremszylinder mit dem Arbeitsausgang des druckgesteuerten Ventils verbindet und bei einer Bestromung des wenigstens einen dritten Magnetventils durch das elektronische Parkbremssteuergerät EPB-ECU eine solche Verbindung sperrt und dann den wenigstens einen Federspeicherbremszylinder mit dem wenigstens einem Druckluftvorrat verbindet.

Mit Hilfe dieser dritten Ventileinrichtung kann ein durch die zweite Ventileinrichtung ausgelöstes Zuspannen des wenigstens einen Federspeicherbremszylinders verhindert oder überschrieben werden, wie weiter unten noch beschrieben wird.

Gemäß **Fig.1a****,** **Fig.1b****,** **Fig.7** und **Fig.9** kann auch noch eine vierte, wenigstens ein von dem elektronischen Parkbremssteuergerät EPB-ECU gesteuertes viertes Magnetventil aufweisende Ventileinrichtung vorgesehen sein, welche an einen pneumatischen Steueranschluss eines elektropneumatischen Anhängersteuermoduls TCM, an wenigstens einen Druckluftvorrat sowie an den Arbeitsausgang des druckgesteuerten Ventils RV angeschlossen und ausgebildet ist, dass sie bei einer Entstromung des wenigstens einen vierten Magnetventils durch das elektronische Parkbremssteuergerät EPB-ECU eine Verbindung zwischen dem pneumatischen Steueranschluss des elektropneumatischen Anhängersteuermoduls TCM mit dem Arbeitsausgang des druckgesteuerten Ventils herstellt und bei einer Bestromung des wenigstens einen vierten Magnetventils eine solche Verbindung sperrt und eine Verbindung zwischen dem wenigstens einen Druckluftvorrat und dem pneumatischen Steueranschluss des elektropneumatischen Anhängersteuermoduls TCM herstellt.

Wie in **Fig.1a****,** **Fig.1b****,** **Fig.7****,** **Fig.9** und **Fig.11** dargestellt, weist das elektropneumatische Anhängersteuermodul TCM einen pneumatischen Anschluss für eine pneumatische oder elektropneumatische Bremseinrichtung eines Anhängers des Fahrzeugs (Zugfahrzeugs) auf und ist ausgebildet, dass es bei einer Belüftung seines pneumatischen Steueranschlusses den pneumatischen Anschluss entlüftet, wodurch die Anhängerbremsen gelöst werden, und bei einer Entlüftung seines pneumatischen Steueranschlusses den pneumatischen Anschluss belüftet, wodurch die Anhängerbremsen zugespannt werden. Insofern wirkt das Anhängersteuermodul TCM pneumatisch invertierend.

Gemäß **Fig.1a****,** **Fig.1b****,** **Fig.7****,** **Fig.9** und **Fig.11** wird das wenigstens eine vierte Magnetventil bevorzugt durch ein Test-Magnetventil gebildet, welches für einen Test vorgesehen ist, ob das über den wenigstens einen Federspeicherbremszylinder eingebremste Zugfahrzeug eine Kombination aus dem Zugfahrzeug und einem Anhänger bei ungebremstem Anhänger im Stillstand halten kann. Dann kann vorteilhaft ein zumeist bereits vorhandenes Test-Magnetventil der elektropneumatischen Parkbremssteuereinrichtung dazu genutzt werden, ein Zuspannen der Anhängerbremsen in einem Störfall zu realisieren wie noch weiter unten beschrieben wird.

Wie in **Fig.3a, Fig.3b****,** **Fig.4a, Fig.4b****,** **Fig.5****,** und **Fig.7** beispielhaft dargestellt ist, kann das wenigstens eine dritte Magnetventil und/oder das wenigstens eine vierte Magnetventil jeweils durch wenigstens eines der folgenden Ventile gebildet werden oder wenigstens ein solches Ventil beinhalten:
a) ein 3/2-Wege-Magnetventil,
b) ein 2/2-Wege-Magnetventil,
c) eine Kombination aus einem 2/2-Wege-Magnetventil und einem Select-High-Ventil.

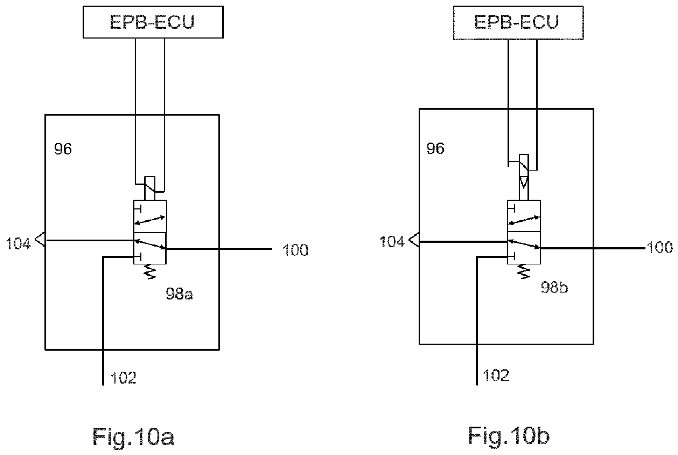

Bei manchen Fahrzeugen ist bereits ein Rohrbruchsicherungsventil vorhanden, das verhindern soll, dass die Federspeicherbremszylinder bei einer gebrochenen Druckluftleitung zum Federspeicherbremszylinder automatisch zuspannen, was zu einem ungewollten Blockieren der Räder führen könnte, (**Fig.9**). Dieses Rohrbruchsicherungsventil besteht vorzugsweise in einem 3/2-Wegeventil, welches mittels eines Select-High-Ventils am Eingang der Federspeicherbremszylinder parallel auf die Federspeicherbremszylinder wirkt und diese dann mit Vorratsdruck versorgt. Dieses Rohrbruchsicherungsventil (z. B. als 3/2-Wege-Magnetventil) in Kombination mit den Select-High-Ventilen kann dann die Funktion der dritten Ventileinrichtung übernehmen (**Fig.10a, Fig.10b**).

Insbesondere können für die erste Ventileinrichtung, die zweite Ventileinrichtung, die dritte Ventileinrichtung und die vierte Ventileinrichtung allgemein 3/2-Wegeventile und/oder 2/2-Wegeventile auch in Kombination mit wenigstens einem weiteren Ventil verwendet werden. Auch können die Ventile elektrisch vorgesteuert sein. Damit können kostengünstige elektrische Vorsteuerventile verwendet werden, welche pneumatische Ventile mit relativ großen Strömungsquerschnitten pneumatisch steuern.

Weiterhin können vierte Mittel zum Detektieren eines Ausfalls des ersten elektrischen Energiespeichers und/oder des zweiten elektrischen Energiespeichers vorgesehen sein. Wenn dann der erste elektrische Energiespeicher und/oder der zweite elektrische Energiespeicher keinen elektrischen Strom mehr liefern kann (können), dann geht damit zwangsläufig eine Entstromung der jeweils angeschlossenen Verbraucher z. B. von Magnetventilen einher, welche dann z. B. federbelastet automatisch umschalten, was ein Fehler- oder Störsignal dieser vierten Mittel darstellt, so dass die vierten Mittel auch durch den ersten elektrischen Energiespeichers und/oder den zweiten elektrischen Energiespeicher selbst gebildet werden können.

Für eine sichere Bewältigung eines dritten Störfalls kann dann beispielsweise eine in wenigstens einem, von wenigstens einer elektrischen Energiequelle der beiden voneinander unabhängigen Energiequellen mit elektrischer Energie versorgten elektronischen Steuergerät implementierte Steuerlogik vorgesehen sein, welche Signale von den vierten Mitteln empfängt und welche derart ausgebildet ist, dass sie bei einem detektierten Ausfall einer einzigen elektrischen Energiequelle der beiden voneinander unabhängigen elektrischen Energiequellen das elektronische Parkbremssteuergerät EPB-ECU derart steuert, dass das wenigstens eine dritte Magnetventil der dritten Ventileinrichtung bestromt wird.

Dieser dritte Störfall betrifft dann beispielsweise zunächst einen Ausfall einer der beiden elektrischen Energiequellen und zeitlich anschließend daran einen Ausfall auch noch der anderen elektrischen Energiequelle.

Dann kann das Fahrzeug bei zunächst lediglich einer ausgefallenen elektrischen Energiequelle noch seine Fahrt fortsetzen und auch noch mit einem von der intakt verbliebenen elektrischen Energiequelle versorgten Betriebsbremskreis automatisch oder durch den Fahrer initiiert bremsen. Dabei schaltet die elektropneumatische Parkbremssteuereinrichtung bzw. deren elektronisches Parkbremssteuergerät EPB-ECU allerdings bereits in den Zustand "Parkbremse zuspannen" vor, d.h. der Arbeitsausgang von deren druckgesteuertem Ventil wird entlüftet. Das Zuspannen des wenigstens einen Federspeicherbremszylinders wird aber (noch) mittels einer Bestromung des dritten Magnetventils der dritten Ventileinrichtung verhindert, welche wie oben beschrieben dann den Arbeitsausgang des druckgesteuerten Ventils gegenüber dem wenigstens einen Federspeicherbremszylinder absperrt und letzteren mit dem wenigstens einen Druckluftvorrat verbindet und dadurch belüftet. Letztlich wird die Parkbremse dadurch bereits vorbereitet für den Fall, dass auch noch die andere elektrische Energiequelle ausfällt.

Falls das dann als Zugfahrzeug wirkende Fahrzeug mit einem Anhängersteuermodul ausgestattet ist und damit einen Anhänger ziehen und abbremsen kann, kann die Steuerlogik weiterhin ausgebildet sein, dass sie bei einem detektierten Ausfall einer einzigen elektrischen Energiequelle der beiden voneinander unabhängigen elektrischen Energiequellen das elektronische Parkbremssteuergerät EPB-ECU derart steuert, dass das wenigstens eine vierte Magnetventil der vierten Ventileinrichtung bestromt wird. Dies bewirkt, wie ebenfalls oben beschrieben, dass der pneumatische Steuereingang des Anhängersteuermoduls belüftet wird, was vor dem Hintergrund der pneumatischen Invertierung der Druckverhältnisse innerhalb eines solchen Anhängersteuermoduls bedeutet, dass die Anhängerbremsen entlüftet und damit ebenfalls deren Zuspannen (zunächst) verhindert wird.

Wenn nun in Fortführung des dritten Störfalls nach einiger Zeit auch noch die andere verbleibende elektrische Energiequelle der lediglich zwei voneinander unabhängigen Energiequellen ausfallen sollte, so werden die elektropneumatische Parkbremssteuereinrichtung bzw. das elektronische Parkbremssteuergerät sowie das wenigstens eine dritte Magnetventil der dritten Ventileinrichtung zwangsläufig entstromt, woraufhin das entstromte wenigstens eine dritte Magnetventil der dritten Ventileinrichtung den wenigstens einen Federspeicherbremszylinder mit dem Arbeitsausgang des druckgesteuerten Ventils verbindet, woraufhin der wenigstens eine Federspeicherbremszylinder entlüftet wird und die Parkbremse automatisch zuspannt.

Falls das Fahrzeug als Zugfahrzeug mit einem Anhängersteuermodul ausgestattet ist, so wird bei einem Ausfall auch der anderen elektrischen Energiequelle der lediglich zwei voneinander unabhängigen Energiequellen das wenigstens eine vierte Magnetventil der vierten Ventileinrichtung entstromt, so dass dadurch der pneumatische Steuereingang des Anhängersteuerventils entlüftet und bedingt durch die pneumatische Invertierung innerhalb des Anhängersteuermoduls die Anhängerbremsen belüftet werden und somit ebenfalls automatisch zuspannen.

Gemäß einer in **Fig.1a****.** **Fig.1b** und **Fig.9** gezeigten Ausführungsform kann eine oben beschriebene Steuerlogik jeweils in dem elektronischen Parkbremssteuergerät EPB-ECU, dem ersten elektronischen Steuergerät ECU1 und in dem zweiten elektronischen Steuergerät ECU2 implementiert sein. Dadurch können die Funktionen der Steuerlogik auch dann ausgeführt werden, wenn eines oder zwei der elektronischen Steuergeräte oder deren elektrische Energieversorgung ausfällt (ausfallen). Alternativ oder zusätzlich kann die Steuerlogik auch in jedem anderen elektronischen Steuergerät implementiert sein, beispielsweise auch in einem Steuergerät der Autopiloteinrichtung.

Wie aus **Fig.1a****,** **Fig.1b****,** **Fig.7****,** **Fig.9****,** **Fig.11** hervorgeht, kann das druckgesteuerte Ventil der elektropneumatischen Parkbremssteuereinrichtung durch ein Relaisventil gebildet werden, welches mit einem Vorratsanschluss an den wenigstens einen Druckluftvorrat angeschlossen ist.

In üblicher Weise weist das Relaisventil zunächst eine mit dem pneumatischen Steuereingang verbundene Steuerkammer, wenigstens einen vom Druck in der Steuerkammer gesteuerten, ein Doppelsitzventil (Einlasssitz, Auslasssitz) betätigenden Relaiskolben sowie eine mit dem Arbeitsausgang verbundene Arbeitskammer auf, wobei der Relaiskolben die Steuerkammer und die Arbeitskammer begrenzt. Die Arbeitskammer mündet in den Arbeitsanschluss.

Dabei ist bevorzugt zwischen dem Arbeitsausgang des Relaisventils und dem pneumatischen Steuereingang des Relaisventils eine pneumatische Rückkopplungsverbindung gezogen, in welcher bevorzugt wenigstens ein pneumatisches Drosselelement angeordnet ist.

Durch die Rückkopplungsverbindung wird eine Bistabilität des Relaisventils hergestellt. Dabei bilden das sehr preiswerte Drosselelement und beispielsweise zwei stromlos geschlossene 2/2-Magnetventile als Einlass-/Auslassventilkombination innerhalb der ersten Ventileinrichtung der elektropneumatischen Parkbremssteuereinrichtung funktional zusammen eine Magnetventileinrichtung mit 3/3-Funktion, bei der sich im unbestromten Zustand beispielsweise beide 2/2-Magnetventile in ihrer Sperrstellung befinden und damit die Steuerkammer des Relaisventils sowohl gegenüber dem Druckluftvorrat als auch gegen Atmosphäre abgesperrt ist.

Deswegen kann zum Zwecke der Rückkopplung wenigstens ein Drosselelement in der zwischen dem Arbeitsausgang und dem pneumatischen Steuereingang des Relaisventils gezogenen Rückkopplungsverbindung angeordnet werden, derart, dass der Arbeitsausgang und der pneumatische Steuereingang des Relaisventils miteinander stets in Strömungsverbindung stehen. Über die mit dem wenigstens einen Drosselelement versehene Rückkopplungsverbindung entsteht ein Rückkopplungskreis, in dem der Druck am Arbeitsausgang des Relaisventils bzw. am Anschluss für den wenigstens einen Federspeicherbremszylinder in den Steuereingang des Relaisventils rückgekoppelt wird, wodurch der zuletzt eingenommene Zustand des wenigstens einen Federspeicherbremszylinders, beispielsweise dessen Zuspannstellung stabil verriegelt wird.

Unter einem Drosselelement soll dabei ein den Strömungsquerschnitt der Rückkopplungsverbindung verengendes Element verstanden werden. Dabei wird der Luftmassenstrom zwischen dem Arbeitsausgang und dem pneumatischen Steuereingang des Relaisventils durch das Drosselelement (in beiden Strömungsrichtungen) auf einen Wert begrenzt, welcher beispielsweise geringer als der Luftmassenstrom ist, welcher mittels der ersten Ventileinrichtung an dem pneumatischen Steuereingang des Relaisventils erzeugbar ist. Dadurch ist einerseits stets die erwünschte Rückkopplung gegeben, andererseits aber eine Übersteuerung der Rückkopplung durch die erste Ventileinrichtung möglich.

Außer dem wenigstens einen Drosselelement sind in der Rückkopplungsverbindung vorzugsweise keine weiteren, den Luftmassenstrom zwischen dem Arbeitsausgang und dem pneumatischen Steuereingang des Relaisventils behindernden oder sperrenden Elemente wie Schaltventile, Proportionalventile, Druckbegrenzungsventile etc. angeordnet.

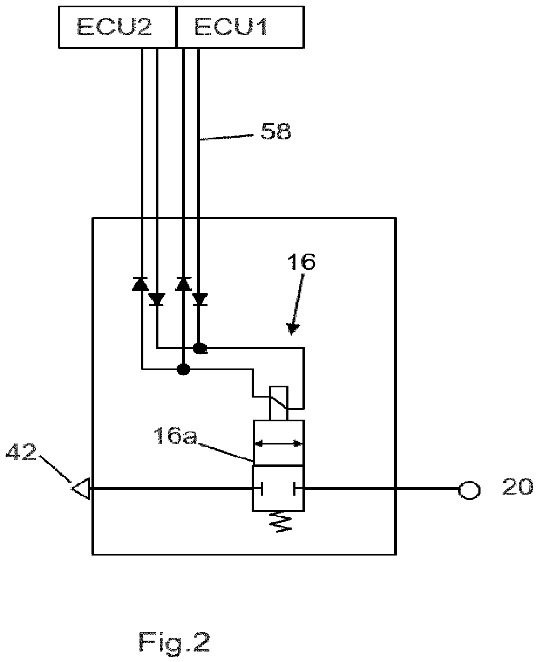

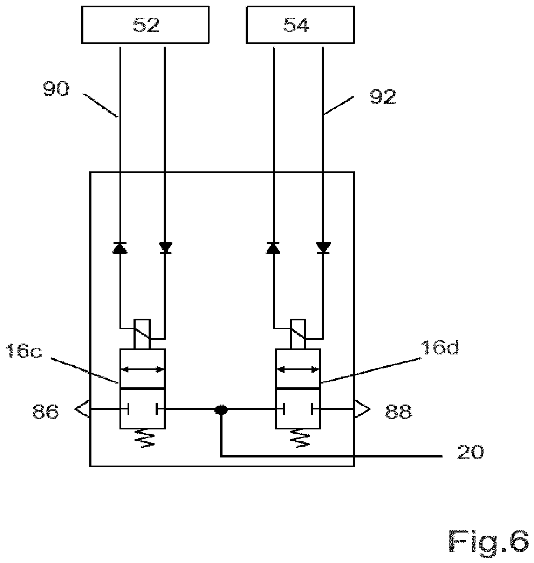

Bevorzugt kann die zweite Ventileinrichtung wenigstens ein elektrisch gesteuertes 2/2-Wegeventil beinhalten, welches
a) wie in **Fig.2** gezeigt, bestromt eine Durchgangsstellung einnimmt, in welcher ein erster Anschluss mit einem zweiten Anschluss verbunden ist, und welches unbestromt eine Sperrstellung (Normally Closed) einnimmt, in welcher diese Verbindung gesperrt ist, oder welches
b) wie in **Fig.6****,** **Fig.8** und **Fig.12** gezeigt, unbestromt eine Durchgangsstellung einnimmt (Normally Open), in welcher ein erster Anschluss mit einem zweiten Anschluss verbunden ist, und welches bestromt eine Sperrstellung einnimmt, in welcher diese Verbindung gesperrt ist.

Die obige Ausführung a) des elektrisch gesteuerten 2/2-Wegeventil der zweiten Ventileinrichtung als ein Normally-Closed-Ventil betrifft bevorzugt den Fall von **Fig.2****,** in welchem das wenigstens eine 2/2-Wegeventil von den beiden elektronischen Steuergeräten im Sinne einer "ODER"-Schaltung elektrisch gesteuert wird, d.h. dass jedes der beiden elektronischen Steuergeräte das wenigstens eine 2/2-Wegeventil unabhängig elektrisch steuern kann.

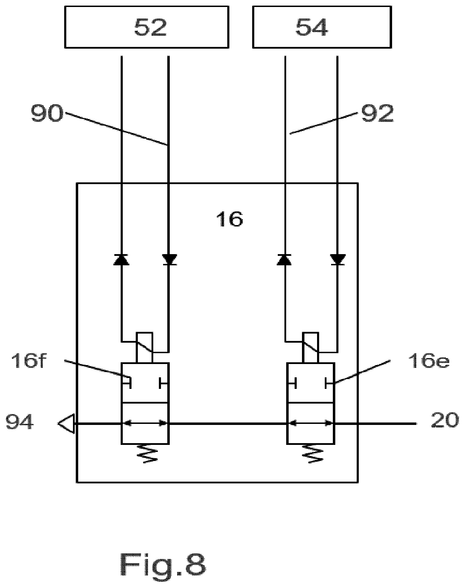

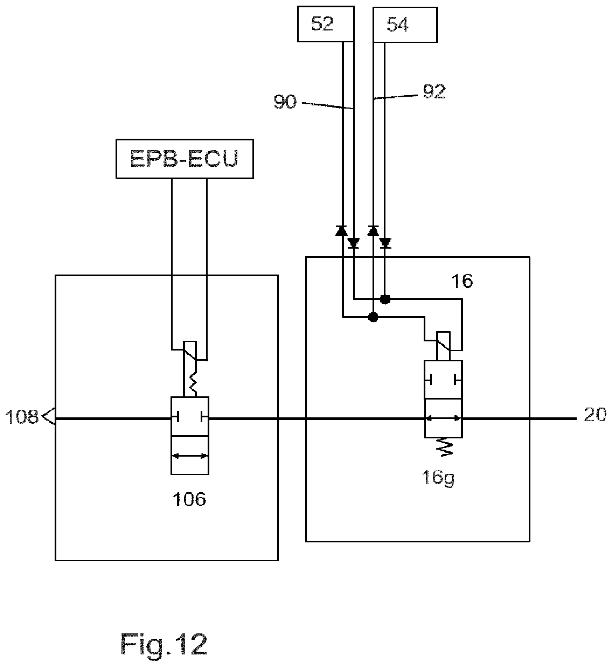

Die obige Ausführung b) des wenigstens einen elektrisch gesteuerten 2/2-Wegeventils der zweiten Ventileinrichtung als ein Normally-Open-Ventil betrifft bevorzugt den Fall von **Fig.8** und **Fig.12****,** in welchem das wenigstens eine 2/2-Wegeventil durch die beiden elektrischen Energiequellen im Sinne einer "UND"-Schaltung elektrisch gesteuert wird, d. h. lediglich bei einem Ausfall beider elektrischer Energieversorgungen wird das wenigstens eine 2/2-Wegeventil in seine Durchgangsstellung geschaltet, um den pneumatischen Steuereingang des druckgesteuerten Ventils mit der weiteren Drucksenke zu verbinden und dadurch den wenigstens einen Federspeicherbremszylinder zu entlüften. Zum andern betrifft die obige Ausführung b) des wenigstens einen elektrisch gesteuerten 2/2-Wegeventils der zweiten Ventileinrichtung als ein Normally-Open-Ventil aber auch den Fall von **Fig.6****,** in welchem das wenigstens eine 2/2-Wegeventil durch die beiden elektrischen Energiequellen im Sinne einer "ODER"-Schaltung elektrisch gesteuert wird, d. h. bei einem Ausfall einer der beiden elektrischen Energieversorgungen wird das wenigstens eine 2/2-Wegeventil in seine Durchgangsstellung geschaltet, um den pneumatischen Steuereingang des druckgesteuerten Ventils mit der weiteren Drucksenke zu verbinden und dadurch den wenigstens einen Federspeicherbremszylinder zu entlüften.

**Fig.2** zeigt eine Ausführungsform, bei welcher die zweite Ventileinrichtung ein einziges elektrisch gesteuertes 2/2-Wegeventil beinhaltet, von welchem ein erster Anschluss mit dem pneumatischen Steuereingang des druckgesteuerten Ventils (RV) und ein zweiter Anschluss mit der weiteren Drucksenke verbunden ist und welches von dem ersten elektronischen Steuergerät ECU1 und unabhängig davon, von dem zweiten elektronischen Steuergerät ECU2 gesteuert ist.

Wie aus **Fig.6****,** **Fig8** und **Fig.12** hervorgeht, kann die zweite Ventileinrichtung zwei elektrisch gesteuerte 2/2-Wegeventile oder ein einziges 2/2-Wege-Magnetventil mit zwei Spulen beinhalten, wobei
a) ein erstes 2/2-Wegeventil oder eine erste Spule des einzigen 2/2-Wege-Magnetventils von der ersten Energiequelle bestromt ist und ein zweites 2/2-Wegeventil oder eine zweite Spule des einzigen 2/2-Wege-Magnetventils von der zweiten Energiequelle bestromt ist, und wobei
b) das einzige 2/2-Wege-Magnetventil oder das erste 2/2-Wegeventil und das zweite 2/2-Wegeventil derart mit dem pneumatischen Steuereingang des druckgesteuerten Ventils und mit der weiteren Drucksenke verschaltet ist (sind), dass lediglich bei einem Ausfall beider elektrischer Energiequellen der pneumatischen Steuereingang des druckgesteuerten Ventils mit der weiteren Drucksenke verbunden ist und ansonsten, d.h. bei einem Ausfall lediglich einer der beiden voneinander unabhängigen elektrischen Energiequellen oder bei intakten beiden voneinander unabhängigen elektrischen Energiequellen eine solche Verbindung gesperrt ist.

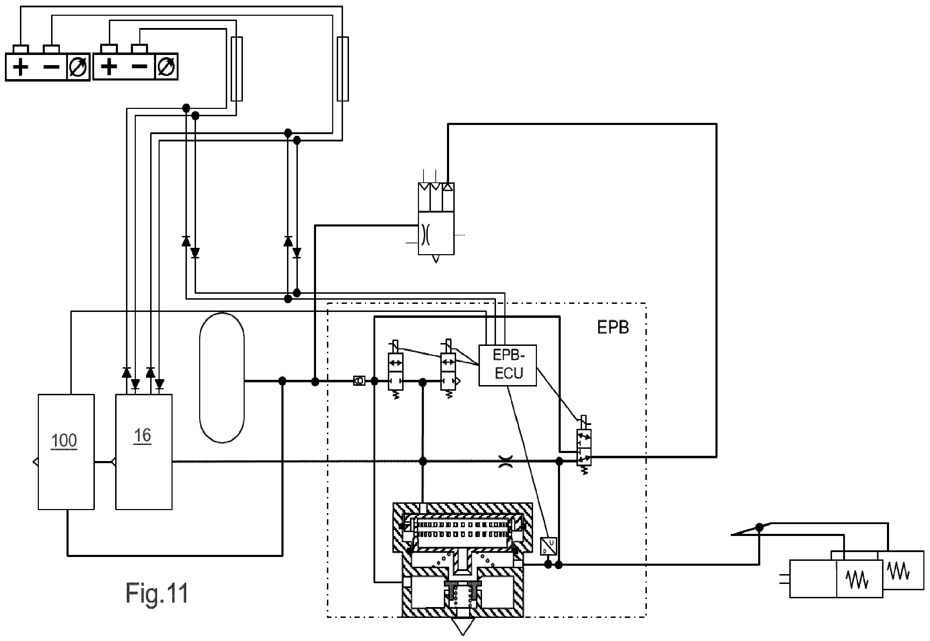

**Fig.11** und **Fig.12** zeigen eine Ausführungsform, bei welcher die zweite Ventileinrichtung wenigstens ein elektrisch gesteuertes 2/2-Wegeventil beinhaltet, welches unbestromt eine Durchgangsstellung einnimmt (Normally Open), in welcher ein erster Anschluss mit einem zweiten Anschluss verbunden ist, und welches bestromt eine Sperrstellung einnimmt, in welcher diese Verbindung gesperrt ist, wobei weiterhin ein Bistabilventil als von dem elektronischen Parkbremssteuergerät EPB-ECU gesteuertes 2/2-Wege-Magnetventil vorgesehen ist, welches von den beiden elektrischen Energiequellen bestromt ist. Das elektrisch gesteuerte 2/2-Wegeventil der zweiten Ventileinrichtung wird beispielsweise im Betrieb von den beiden elektrischen Energiequellen dauerbestromt, so dass es im fehlerfreien Fall während der Fahrt geschlossen ist. Das Bistabilventil wird bevorzugt durch das elektronische Parkbremssteuergerät der elektropneumatischen Parkbremseinrichtung gesteuert. Dann kann das elektronische Parkbremssteuergerät auswählen, ob die Parkbremse bei Stromausfall automatisch eingelegt werden soll. Die Bistabilität kann z.B. über ein rückgekoppeltes Booster-Ventil, das drucklos in Richtung geschlossen schaltet, realisiert werden.

Bei den Ausführungsformen von **Fig.1a****,** **Fig.1b****,** **Fig.7****,** **Fig.9** und **Fig.11** wird das wenigstens eine erste Magnetventil der ersten Ventileinrichtung beispielsweise durch eine Kombination von zwei 2/2-Wege-Magnetventilen als Einlass-/Auslassventilkombination gebildet.

Generell können das erste elektronische Steuergerät ECU1 und das zweite elektronische Steuergerät ECU2, wie in **Fig.1a****,** **Fig.1b****,** **Fig.7****,** **Fig.9** und **Fig.11** gezeigt, jeweils durch eines der folgenden elektronischen Steuergeräte gebildet werden:
a) Ein elektronisches Steuergerät EBS-ECU, welches ein elektronisch geregeltes elektropneumatisches Betriebsbremssystem EBS des Fahrzeugs steuert oder regelt,
b) ein elektronisches Steuergerät iFBM-ECU, welches einerseits eine Auswerteeinrichtung für Signale eines mit einem Bremspedal zusammen wirkenden Bremswertgebers eines elektropneumatischen Fußbremsmoduls darstellt und welches anderseits eine Magnetventileinrichtung steuert, durch welche eine pneumatische Steuerkammer des elektropneumatischen Fußbremsmoduls be- oder entlüftet, mit welcher wenigstens ein pneumatischer Kanal des Fußbremsmoduls betätigbar ist,
c) ein elektronisches Steuergerät Steer-ECU, welches eine elektrische Lenkeinrichtung des Fahrzeugs steuert,
d) ein elektronisches Steuergerät ACC-ECU, welches ein Fahrerassistenzsystem des Fahrzeugs steuert,
e) ein elektronisches Steuergerät Autopilot-ECU, welches eine Autopiloteinrichtung des Fahrzeugs steuert, mit welcher ein teilautonomes oder autonomes Fahren realisiert ist,
f) ein elektronisches Steuergerät EAC-ECU, welches eine Druckluftaufbereitungseinrichtung für Druckluftverbraucher des Fahrzeugs steuert,
g) ein elektronisches Steuergerät ASC-ECU, welches eine Luftfederungseinrichtung des Fahrzeugs steuert,
h) ein elektronisches Steuergerät Central-ECU, welche einen zentralen Fahrzeugrechner des Fahrzeugs bildet.

### Gemäß einer Weiterbildung können

a) die ersten Mittel zum Detektieren eines Ausfalls des elektronischen Parkbremssteuergeräts EPB-ECU, und/oder
b) die dritten Mittel zum Detektieren eines Ausfalls des ersten elektronischen Steuergeräts ECU1 und/oder des zweiten elektronischen Steuergeräts ECU2, und/oder
c) die vierten Mittel zum Detektieren eines Ausfalls des ersten elektrischen Energiespeichers und/oder des zweiten elektrischen Energiespeichers
eine Detektion durch Eigenüberwachung oder eine Detektion durch Fremdüberwachung (beispielsweise durch ein anderes elektronisches Steuergerät beinhalten.

Gemäß der in **Fig.1a****,** **Fig.1b****,** **Fig.7** **und** **Fig.9** gezeigten Ausführungsformen können dass wenigstens das elektronische Parkbremssteuergerät, die erste Ventileinrichtung samt dem wenigstens einen ersten Magnetventil und das druckgesteuerte Ventil in einem gemeinsamen Gehäuse der Parkbremssteuereinrichtung integriert sein.

Wie der Ausführungsform von **Fig.1b** gezeigt, können das wenigstens eine zweite Magnetventil, das wenigstens eine dritte Magnetventil und/oder das wenigstens eine vierte Magnetventil in dem Gehäuse der Parkbremssteuereinrichtung integriert oder an dem Gehäuse der Parkbremssteuereinrichtung angeflanscht sein.

Wie insbesondere aus **Fig.1a****,** **Fig.1b****,** **Fig.7** und **Fig.9** hervorgeht, können die erste elektrische Energiequelle und die zweite elektrische Energiequelle jeweils durch Kreistrennungs-Dioden und/oder durch in Reihe dazu geschaltete Stromsicherungen und/oder durch Relais voneinander entkoppelt sein.

Besonders bevorzugt beinhaltet die elektropneumatische Ausrüstung auch ein elektronisch geregeltes elektropneumatisches Betriebsbremssystem (EBS), bei welchem der Betriebsbremsdruck auf einen Sollwert geregelt wird.

Insbesondere können die beiden elektrischen Energiequellen jeweils einen elektrischen oder elektropneumatischen Betriebsbremskreis mit elektrischer Energie versorgen.

Die Erfindung umfasst auch ein Fahrzeug mit einer oben beschriebenen elektropneumatischen Ausrüstung.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
- Fig.1a: ein schematisches Schaltbild einer bevorzugten Ausführungsform einer elektropneumatischen Ausrüstung eines Fahrzeugs gemäß der Erfindung;
- Fig.1b: ein schematisches Schaltbild einer weiteren Ausführungsform einer elektropneumatischen Ausrüstung eines Fahrzeugs gemäß der Erfindung;
- Fig.2: ein schematisches Schaltbild eines zweiten 2/2-Wege-Magnetventils einer zweiten Ventileinrichtung der elektropneumatischen Ausrüstung von Fig.1a oder Fig.1b;
- Fig.3a: ein schematisches Schaltbild einer bevorzugten Ausführungsform eines dritten 3/2-Wege-Magnetventils einer dritten Ventileinrichtung der elektropneumatischen Ausrüstung von Fig.1a oder Fig.1b;
- Fig.3b: ein schematisches Schaltbild einer weiteren Ausführungsform eines dritten 3/2-Wegeventils einer dritten Ventileinrichtung der elektropneumatischen Ausrüstung von Fig.1a oder Fig.1b;
- Fig.4a: ein schematisches Schaltbild einer bevorzugten Ausführungsform einer dritten Ventileinrichtung einer elektropneumatischen Ausrüstung gemäß der Erfindung;
- Fig.4b: ein schematisches Schaltbild einer weiteren Ausführungsform einer dritten Ventileinrichtung einer elektropneumatischen Ausrüstung gemäß der Erfindung;
- Fig.5: ein schematisches Schaltbild einer weiteren Ausführungsform einer dritten Ventileinrichtung einer elektropneumatischen Ausrüstung gemäß der Erfindung;
- Fig.6: ein schematisches Schaltbild einer weiteren Ausführungsform einer zweiten Ventileinrichtung einer elektropneumatischen Ausrüstung gemäß der Erfindung;
- Fig.7: ein schematisches Schaltbild einer weiteren Ausführungsform einer elektropneumatischen Ausrüstung eines Fahrzeugs gemäß der Erfindung;
- Fig.8: ein schematisches Schaltbild einer weiteren Ausführungsform einer zweiten Ventileinrichtung einer elektropneumatischen Ausrüstung gemäß der Erfindung;
- Fig.9: ein schematisches Schaltbild einer weiteren Ausführungsform einer elektropneumatischen Ausrüstung eines Fahrzeugs gemäß der Erfindung;
- Fig.10a: ein schematisches Schaltbild einer weiteren Ausführungsform einer dritten Ventileinrichtung einer elektropneumatischen Ausrüstung gemäß der Erfindung;
- Fig.10b: ein schematisches Schaltbild einer weiteren Ausführungsform einer dritten Ventileinrichtung gemäß der Erfindung;
- Fig.11: ein schematisches Schaltbild einer weiteren Ausführungsform einer elektropneumatischen Ausrüstung eines Fahrzeugs gemäß der Erfindung;
- Fig.12: ein schematisches Schaltbild einer weiteren Ausführungsform einer zweiten Ventileinrichtung gemäß der Erfindung mit einem Bistabilventil.

### Beschreibung der Ausführungsbeispiele

**Fig.1a** zeigt ein schematisches Schaltbild einer bevorzugten Ausführungsform einer elektropneumatischen Ausrüstung 1 gemäß der Erfindung. Die elektropneumatische Ausrüstung 1 ist bevorzugt Bestandteil eines schweren Nutzfahrzeugs als Zugfahrzeug einer Zugfahrzeug-Anhängerkombination und umfasst eine elektropneumatische Bremseinrichtung aus einer elektropneumatischen Parkbremseinrichtung 2 und einer elektropneumatischen Betriebsbremseinrichtung, welche hier beispielsweise eine elektronisch geregelte Betriebsbremseinrichtung (EBS) und auf dem Zugfahrzeug angeordnet ist.

Die elektropneumatische Parkbremseinrichtung 2 umfasst eine elektropneumatische Parkbremssteuereinrichtung EPB, bevorzugt mit einem eigenen Gehäuse 4, einen Druckluftvorrat 6 und pneumatische Federspeicherbremszylinder 8. Die elektropneumatische Parkbremssteuereinrichtung EPB weist ein elektronisches Parkbremssteuergerät EPB-ECU und eine erste Ventileinrichtung 10 hier aus einer Einlass-/Auslass-Magnetventilkombination 11 und einem von dieser druckgesteuertem Relaisventil RV auf, bei welcher die Einlass-/Auslass-Magnetventilkombination 11 von dem elektronischen Parkbremssteuergerät EPB-ECU elektrisch gesteuert ist. Der Druckluftvorrat 6 ist über eine Vorratsleitung 12 an einen Vorratsanschluss 14 der elektropneumatischen Parkbremssteuereinrichtung EPB angeschlossen.

Eine zweite Ventileinrichtung 16 ist über eine pneumatische Steuerleitung 18 an einen pneumatischen Steueranschluss 20 der elektropneumatischen Parkbremssteuereinrichtung EPB angeschlossen.

Ein pneumatischer Steuereingang 22 des Relaisventils RV ist an die Einlass-/Auslass-Magnetventilkombination 11 angeschlossen, um das Relaisventil RV pneumatisch zu steuern. Weiterhin ist ein Arbeitsausgang 24 des Relaisventils RV an einen Arbeitsanschluss 26 der elektropneumatischen Parkbremssteuereinrichtung EPB angeschlossen, mit welchem auch hier beispielsweise über eine dritte Ventileinrichtung 28 in einer pneumatischen Bremsleitung 30 die Federspeicherbremszylinder 8 in Verbindung bringbar sind.

In üblicher Weise weist das Relaisventil RV zunächst eine mit dem pneumatischen Steuereingang 22 verbundene Steuerkammer, wenigstens einen vom Druck in der Steuerkammer gesteuerten, ein Doppelsitzventil (Einlasssitz, Auslasssitz) betätigenden Relaiskolben sowie eine mit dem Arbeitsausgang 24 verbundene Arbeitskammer auf, wobei der Relaiskolben die Steuerkammer und die Arbeitskammer begrenzt. Die Arbeitskammer kann über eine Drucksenke des Relaisventils RV entlüftet oder mit einem Vorratsanschluss des Relaisventils RV verbunden werden, welcher an den Vorratsanschluss 14 angeschlossen ist.

Hier ist bevorzugt zwischen dem Arbeitsausgang 24 des Relaisventils RV und dem pneumatischen Steuereingang 22 des Relaisventils RV eine pneumatische Rückkopplungsverbindung 32 gezogen, in welcher bevorzugt ein pneumatisches Drosselelement 34 angeordnet ist. Das Relaisventil RV ist wiederum ausgebildet, dass es bei einer Entlüftung seines pneumatischen Steuereingangs 22 seinen Arbeitsausgang 24 entlüftet und bei einer Belüftung seines pneumatischen Steuereingangs 22 seinen Arbeitsausgang 24 belüftet, indem es dann Druckluft vom Vorratsanschluss 14 her nachfördert, an welches es angeschlossen ist.

Bei der elektropneumatischen Parkbremssteuereinrichtung EPB sind die Einlass-/Auslass-Magnetventilkombination 11, das Relaisventil RV sowie eine vierte Ventileinrichtung 36 hier in Form eines Test-Magnetventils an den Vorratsanschluss 14 über eine interne Vorratsverbindung angeschlossen. Weiterhin ist die Einlass-/Auslass-Magnetventilkombination 11 an eine erste Drucksenke 40 angeschlossen.

Die Einlass-/Auslass-Magnetventilkombination 11 ist ausgebildet, dass sie abhängig von der Steuerung durch das elektronische Parkbremssteuergerät EPB-ECU den pneumatischen Steuereingang 22 des Relaisventils RV mit dem Vorratsanschluss 14 oder mit der ersten Drucksenke 40 verbindet oder jeweils eine solche Verbindung sperrt.

Die wenigstens ein zweites Magnetventil aufweisende zweite Ventileinrichtung 16 ist an den Steueranschluss 20 und damit auch an den pneumatischen Steuereingang 22 des Relaisventils RV der ersten Ventileinrichtung 10 über die pneumatische Steuerleitung 18 angeschlossen. Wie aus **Fig.2** hervorgeht, ist die zweite Ventileinrichtung 16 beispielsweise als 2/2-Wege-Magnetventil 16a ausgebildet, welches abhängig von einer Bestromung oder Entstromung seinen mit dem pneumatischen Steueranschluss 20 und damit mit dem pneumatischen Steuereingang 22 des Relaisventils RV verbundenen Anschluss mit einer zweiten Drucksenke 42 verbindet oder eine solche Verbindung sperrt.

Die elektronische Parkbremssteuergerät EPB-ECU ist über eine Parkbremsbetätigungseinrichtung 44 elektrisch steuerbar, die der Fahrer über ein Parkbremsbetätigungsorgan 46 betätigen und dadurch Parkbremsbetätigungssignale über eine Signalleitung 48 und einen Signalanschluss 50 in das elektronische Parkbremssteuergerät EPB-ECU zum Steuern der Parkbremse einsteuern kann.

Die elektropneumatische Parkbremssteuereinrichtung EPB bzw. deren elektronisches Parkbremssteuergerät EPB-ECU wird durch lediglich zwei voneinander unabhängige elektrische Energiequellen, einer ersten elektrischen Energiequelle 52 und einer zweiten elektrischen Energiequelle 54 mit elektrischer Energie über elektrische Versorgungsleitungen 56 versorgt.

Weiterhin wird das 2/2-Wege-Magnetventil 16a der zweiten Ventileinrichtung 16 durch zwei voneinander unabhängige elektronische Steuergeräte ECU1, ECU2 mittels Steuerleitungen gesteuert (Bestromen oder Entstromen), von welchen ein erstes elektronisches Steuergerät ECU1 und ein zweites elektronisches Steuergerät ECU2 von einer jeweils anderen elektrischen Energiequelle 52 oder 54 der lediglich zwei voneinander unabhängigen elektrischen Energiequellen 52, 54 mit elektrischer Energie versorgt ist.

Hier sind beispielsweise die erste elektrische Energiequelle 52 und die zweite elektrische Energiequelle 54 jeweils durch Kreistrennungs-Dioden 60 und durch in Reihe dazu geschaltete Stromsicherungen 62 in den Versorgungsleitungen 56 voneinander entkoppelt.

Weiterhin ist bei der elektropneumatischen Parkbremssteuereinrichtung EPB auch ein Anhängeranschluss 64 vorhanden, welcher mit dem Test-Magnetventil 36 in Verbindung steht und welcher andererseits über eine pneumatische Leitung 66 mit einem pneumatischen Steuereingang eines Anhängersteuermoduls TCM verbunden ist, welches für die Steuerung der Bremseinrichtung des Anhängers vorgesehen ist. Das Anhängersteuermodul TCM invertiert den Druck an seinem pneumatischen Steuereingang 68 an einem Arbeitsausgang 70, an welchen die pneumatische Bremseinrichtung des Anhängers angeschlossen ist. Das Anhängersteuermodul TCM wird ebenfalls über eine Vorratsleitung 72 mit Druckluft aus dem Druckluftvorrat 6 versorgt.

Das in **Fig.2** gezeigte 2/2-Wege-Magnetventil 16a als zweite Ventileinrichtung 16 wird einerseits durch das erste elektronische Steuergerät ECU1 und andererseits, unabhängig davon auch durch das zweite elektronische Steuergerät ECU2 elektrisch gesteuert. Das 2/2-Wege-Magnetventil 16a ist bevorzugt ein Normally-Closed-Magnetventil, welches unbestromt eine Verbindung zwischen dem pneumatischen Steueranschluss 20 der elektropneumatischen Parkbremssteuereinrichtung EPB bzw. dem pneumatischen Steuereingang 22 des Relaisventils RV und der ersten Drucksenke 40 sperrt und diese Verbindung bestromt freigibt.

Die dritte Ventileinrichtung 28 wird hier beispielsweise durch ein 3/2-Wege-Magnetventil 28a wie in **Fig.3a** gezeigt gebildet, welches an den Arbeitsanschluss 26 und damit auch an den Arbeitsausgang 24 des Relaisventils RV, über die Vorratsleitung 72 an den Druckluftvorrat 6 sowie an die Federspeicherbremszylinder 8 angeschlossen ist. Dieses 3/2-Wege-Magnetventil 28a ist ausgebildet, dass sie bei einer Entstromung durch das elektronische Parkbremssteuergerät EPB-ECU die Federspeicherbremszylinder 8 mit dem Arbeitsanschluss 26 bzw. mit dem Arbeitsausgang 24 des Relaisventils RV verbindet und bei einer Bestromung durch das elektronische Parkbremssteuergerät EPB-ECU eine solche Verbindung sperrt und dann die Federspeicherbremszylinder 8 mit dem Druckluftvorrat 6 verbindet. Die dritte Ventileinrichtung 28 bzw. das 3/2-Wege-Magnetventil 28a wird über eine Steuerleitung 74 durch das elektronische Parkbremssteuergerät EPB-ECU gesteuert.

**Fig.3b** zeigt als Alternative ein vorgesteuertes 3/2-Wege-Ventil 28b als dritte Ventileinrichtung 28, welches aber ansonsten die gleiche Funktionalität bietet wie das 3/2-Wege-Magnetventil 28a von **Fig.3a****.**

Das Test-Magnetventil 36 als vierte Ventileinrichtung ist hier beispielsweise ein 3/2-Wege-Magnetventil und von dem elektronischen Parkbremssteuergerät (EPB-ECU) über eine Steuerleitung gesteuert, welches einerseits an den Anhängeranschluss 64, über die Vorratsverbindg 38 an den Druckluftvorrat 6 sowie an den Arbeitsausgang 24 des Relaisventils RV angeschlossen ist. Es ist ausgebildet, dass es bei einer Entstromung durch das elektronische Parkbremssteuergerät EPB-ECU eine Verbindung zwischen dem Anhängeranschluss 64 mit dem Arbeitsausgang 24 des Relaisventils RV herstellt und bei einer Bestromung eine solche Verbindung sperrt und dann aber eine Verbindung zwischen dem Druckluftvorrat 6 und dem Anhängeranschluss 64 für das Anhängersteuermodul (TCM) herstellt.

Das Test-Magnetventil 36 ist (auch) für einen Test vorgesehen, ob das über die Federspeicherbremszylinder 8 eingebremste Zugfahrzeug eine Kombination aus dem Zugfahrzeug und Anhänger bei ungebremstem Anhänger im Stillstand halten kann.

Das Test-Magnetventil 36 ist als vierte Ventileinrichtung bevorzugt wie auch die Einlass-/Auslass-Magnetventilkombination 11, das Relaisventil RV, das elektronische Parkbremssteuergerät EPB-ECU, und ein Drucksensor , welcher den aktuellen Druck am Arbeitsausgang 24 des Relaisventils RV misst und ein entsprechendes Signal in das elektronische Parkbremssteuergerät EPB-ECU rückkoppelt in dem Gehäuse 4 der elektropneumatischen Parkbremssteuereinrichtung EPB integriert.

Die beiden elektronischen Steuergeräte ECU1, ECU2 sind bevorzugt an einen Datenbus angeschlossen und können über den Datenbus miteinander und mit anderen Steuergeräten kommunizieren, insbesondere Signale, welche eine Störung oder einen Ausfall eines der elektronischen Steuergeräte ECU1 oder ECU2 betreffen und diese Information dann dem jeweils anderen Steuergerät ECU1 oder ECU2 mitteilen. Insofern kann hier eine Fremdüberwachung der elektronischen Steuergeräte ECU1, ECU2 untereinander realisiert sein, aber auch eine Selbstüberwachung ist denkbar.

Weiterhin sind erste Mittel zum Detektieren eines Ausfalls des elektronischen Parkbremssteuergeräts EPB-ECU vorhanden, die insbesondere in dem elektronischen Parkbremssteuergerät EPB-ECU lokalisiert sind und durch welche das elektronische Parkbremssteuergerät EPB-ECU beispielsweise eine Selbstüberwachung durchführen kann. Denkbar ist aber auch eine Fremdüberwachung durch die beiden elektronischen Steuergeräte ECU1 und ECU2, welche dann die ersten Mittel bilden. Das elektronische Parkbremssteuergerät EPB-ECU ist bevorzugt ebenfalls an den Datenbus angeschlossen.

Darüber hinaus sind auch beispielsweise zweite Mittel zum Detektieren eines Fahrzustands des Fahrzeugs hinsichtlich Fahren oder Stillstand vorhanden, beispielsweise in Form von Raddrehzahlsensoren an den Rädern des Fahrzeugs, welche Drehzahlsignale erzeugen.

Nicht zuletzt sind auch dritte Mittel zum Detektieren eines Ausfalls des ersten elektronischen Steuergeräts ECU1 und/oder des zweiten elektronischen Steuergeräts ECU2 vorgesehen, die insbesondere in dem ersten elektronischen Steuergerät ECU1 und/oder in dem zweiten elektronischen Steuergerät ECU2 lokalisiert sind und durch welche die elektronischen Steuergeräte ECU1 und ECU2 wie oben beschrieben jeweils eine Selbstüberwachung durchführen können.

Dabei sind die ersten Mittel, die zweiten Mittel und die dritten Mittel von wenigstens einer elektrischen Energiequelle 52, 54 der beiden voneinander unabhängigen Energiequellen 52, 54 mit elektrischer Energie versorgt.

Weiterhin ist beispielsweise in den beiden elektronischen Steuergeräten ECU1, ECU2 sowie auch in dem elektronischen Parkbremssteuergerät EPB-ECU jeweils eine Steuerlogik implementiert, durch welche das elektronische Parkbremssteuergerät EPB-ECU die erste Ventileinrichtung 10, die dritte Ventileinrichtung 28 und die vierte Ventileinrichtung 36 und die beiden elektronischen Steuergeräte ECU1, ECU2 die zweite Ventileinrichtung 16 elektrisch steuert.

Das erste elektronisches Steuergerät ECU1 ist beispielsweise eine EBS-ECU, welche einen (Haupt-) Betriebsbremskreis des elektronisch geregelten elektropneumatischen Betriebsbremssystems EBS steuert oder regelt, während das zweite elektronische Steuergerät ECU2 beispielsweise einerseits eine Auswerteeinrichtung für Signale eines mit einem Bremspedal 80 zusammen wirkenden Bremswertgebers eines elektropneumatischen Fußbremsmoduls iFBM darstellt und welches anderseits eine Magnetventileinrichtung 82 steuert, durch welche eine pneumatische Steuerkammer des elektropneumatischen Fußbremsmoduls iFBM be- oder entlüftet wird, mit welcher ein pneumatischer Kanal des Fußbremsmoduls iFBM betätigbar ist. Der integrierte Bremswertgeber erzeugt dann abhängig von einer Betätigung des Bremspedals 80 elektrische Betriebsbremsanforderungssignale und steuert diese dann zum einen das erste elektronische Steuergerät ECU1 als auch in das zweite elektronische Steuergerät ECU2 ein.

Hier stammen daher die in das erste elektronische Steuergerät ECU1 und in das zweite elektronische Steuergerät ECU2 eingesteuerten Betriebsbremsanforderungssignale bevorzugt von dem Fußbremsmodul iFBM und hängen daher vom Fahrerwunsch ab. Alternativ oder zusätzlich können die Betriebsbremsanforderungssignale auch durch die Autopiloteinrichtung erzeugt werden, durch welche ein (teil-) autonomes Fahren des Fahrzeugs realisiert wird.

Gleiches gilt für in das elektronische Parkbremssteuergerät EPB-ECU eingesteuerte Parkbremsanforderungssignale, welche von der Parkbremsbetätigungseinrichtung 44 und/oder von der Autopiloteinrichtung erzeugt werden können.

Vor diesem Hintergrund ist die Funktionsweise der elektropneumatischen Ausrüstung 1 wie folgt:
Im ungestörten Betrieb, d.h. bei funktionsfähigen elektrischen Energiequellen 52, 54 und funktionsfähigen elektronischen Steuergeräten (Parkbremssteuergerät EPB-ECU erstes elektronisches Steuergerät ECU1, zweites elektronisches Steuergerät ECU2) werden die vom Fußbremsmodul iFBM oder auch von der Autopiloteinrichtung erzeugten Betriebsbremsanforderungssignale in den beiden elektronischen Steuergeräten ECU1, ECU2 modifiziert und in hier nicht gezeigten elektropneumatischen Druckregelmoduln umgesetzt, welche dann hier ebenfalls nicht gezeigte pneumatische Betriebsbremszylinder ansteuern.

In analoger Weise werden von der Parkbremsbetätigungseinrichtung 44 und/oder von der Autopiloteinrichtung erzeugte Parkbremsanforderungssignale z.B. im Sinne von "Parkbremse zuspannen" in das intakte Parkbremssteuergerät EPB-ECU eingesteuert, welches daraufhin die erste Ventileinrichtung 10 ansteuert, um den Steuereingang 22 des Relaisventils RV entsprechend der Vorgabe zu entlüften, woraufhin das Relaisventil RV seinen Arbeitsausgang 24 und damit auch den Arbeitsanschluss 26 der elektropneumatischen Parkbremssteuereinrichtung EPB entlüftet, um die Federspeicherbremszylinder 8 zu entlüften und damit zuzuspannen.

Das 3/2-Wege-Magnetventil 28a der dritten Ventileinrichtung 28 wird dabei durch das elektronische Parkbremssteuergerät EPB-ECU entstromt bzw. nicht bestromt wodurch die Federspeicherbremszylinder 8 mit dem Arbeitsausgang 24 des Relaisventils RV verbunden bleiben.

Weiterhin wird das Test-Magnetventil 36 von dem elektronischen Parkbremssteuergerät EPB-ECU entstromt gehalten, so dass dieses wie in **Fig.1a** gezeigt den Anhängeranschluss 64 mit dem entlüfteten Arbeitsausgang 24 des Relaisventils RV verbindet und damit auch den pneumatischen Steuereingang 68 des Anhängersteuermoduls TCM entlüftet, was durch die pneumatische Invertierung zu einem Belüften und schließlich zum Zuspannen der Anhängerbremsen führt.

Im intakten Fall bestromen das erste elektronische Steuergerät ECU1 und das zweite elektronische Steuergerät ECU2 bevorzugt die zweite Ventileinrichtung 16 beispielsweise in Form des 2/2-Wege-Magnetventils 16a von **Fig.2****,** damit dieses seine Sperrstellung einnimmt und dann den pneumatischen Steueranschluss 20 nicht entlüftet.

In einem anderen Fall wird nun das Fahrzeug mit Hilfe eines intakten Betriebsbremskreises bis in den Stillstand abgebremst, wobei dann die Steuerlogik ein Signal von den ersten Mitteln in Form der Raddrehzahlsensoren empfängt, dass sich das Fahrzeug auch tatsächlich im Stillstand befindet. Sollte dann im Rahmen eines ersten Störfalls von den zweiten Mitteln ein Ausfall des elektronischen Parkbremssteuergeräts EPB-ECU beispielsweise infolge von dessen Selbstüberwachung detektiert worden sein, so wird gemäß der Steuerlogik über den Datenbus ein entsprechendes Fehlersignal ("Parkbremssteuergerät EPB-ECU defekt") an das erste elektronische Steuergerät ECU1 und das zweite elektronische Steuergerät ECU2 gesendet, woraufhin diese die zweite Ventileinrichtung 16 beispielsweise in Form des 2/2-Wege-Magnetventils 16a von **Fig.2** entstromen, um den pneumatischen Steuereingang 22 des Relaisventils RV der Parkbremssteuereinrichtung EPB mit der zweiten Drucksenke 42 zu verbinden, wodurch der pneumatische Steuereingang 22 des Relaisventils RV und damit auch dessen Arbeitsausgang 24 sowie der Arbeitsanschluss 26 entlüftet werden.

Da das Parkbremssteuergerät EPB-ECU defekt ist, bleibt auch die dritte Ventileinrichtung 28 beispielsweise in Form des 3/2-Wege-Magnetventil 28a von **Fig.3a** entstromt, wodurch die Federspeicherbremszylinder 8 mit dem entlüfteten Arbeitsausgang 24 des Relaisventils RV verbunden bleiben und damit zuspannen können.

Weiterhin bleibt auch das von dem nun defekten elektronischen Parkbremssteuergerät EPB-ECU gesteuerte Test-Magnetventil 36 zwangsläufig entstromt, so dass dieses wie in **Fig.1a** gezeigt den Anhängeranschluss 64 mit dem entlüfteten Arbeitsausgang 24 des Relaisventils RV verbindet und damit auch den pneumatischen Steuereingang 68 des Anhängersteuermoduls TCM entlüftet, was durch die pneumatische Invertierung zu einem Belüften und schließlich zum Zuspannen der Anhängerbremsen führt.

In einem weiteren Fall wird nun das Fahrzeug mit Hilfe eines intakten Betriebsbremskreises bis in den Stillstand abgebremst, wobei dann die Steuerlogik ein Signal von den ersten Mitteln in Form der Raddrehzahlsensoren empfängt, dass sich das Fahrzeug auch tatsächlich im Stillstand befindet. Sollte dann im Rahmen eines zweiten Störfalls von den zweiten Mitteln ein Ausfall des elektronischen Parkbremssteuergeräts EPB-ECU beispielsweise infolge von dessen Selbstüberwachung detektiert worden sein, so wird über den Datenbus ein entsprechendes Fehlersignal ("Parkbremssteuergerät EPB-ECU defekt") an das erste elektronische Steuergerät ECU1 und das zweite elektronische Steuergerät ECU2 gesendet. Insofern unterscheidet sich der zweite Störfall zunächst nicht von dem ersten Störfall.

Sollten darüber hinaus die dritten Mittel einen beispielsweise zeitlich nachfolgenden Ausfall beispielsweise des ersten elektronischen Steuergeräts ECU1 beispielsweise infolge von dessen Selbstüberwachung an das zweite elektronische Steuergerät ECU2 melden, so bedeutet dies, dass das erste elektronische Steuergeräts ECU1 nun die zweite Ventileinrichtung 16 beispielsweise in Form des 2/2-Wege-Magnetventils 16a von **Fig.2** nicht mehr bestromen kann, um dieses in der Sperrstellung zu halten. Eine (vorübergehende) Bestromung der zweiten Ventileinrichtung 16 wird aber (zunächst) noch von dem intakt verbliebenen zweiten elektronischen Steuergerät ECU2 vorgenommen.

Auf die Fehlermeldung des ersten elektronischen Steuergeräts ECU1 hin ist die Steuerlogik ausgebildet, dass nun das zweite elektronische Steuergerät ECU2 die zweite Ventileinrichtung 16 beispielsweise in Form des 2/2-Wege-Magnetventils 16a von **Fig.2** entstromt, um den pneumatischen Steuereingang 22 des Relaisventils der Parkbremssteuereinrichtung EPB mit der zweiten Drucksenke 42 zu verbinden, wodurch der pneumatische Steuereingang 22 des Relaisventils RV und damit auch dessen Arbeitsausgang 24 sowie der Arbeitsanschluss 26 entlüftet werden, wodurch die Federspeicherbremszylinder 8 des Zugfahrzeugs zuspannen.

Insofern ist klar, dass die beiden elektronischen Steuergeräte ECU1 und ECU2 die zweite Ventileinrichtung 16 im Sinne einer "ODER"-Schaltung bestromen, d.h. dass jedes der beiden elektronischen Steuergeräte ECU1 oder ECU2 das zweite 2/2-Wege-Magnetventil 16a separat bestromen kann, um deren Sperrstellung hervorzurufen oder zu halten.

Da weiterhin das Parkbremssteuergerät EPB-ECU defekt ist, können weder die dritte Ventileinrichtung 28 noch die vierte Ventileinrichtung 36 bestromt werden, so dass zum einen die Federspeicherbremszylinder 8 mit dem entlüfteten Arbeitsanschluss 26 in Verbindung bleiben und zum andern auch der pneumatische Steuereingang 68 des Anhängersteuermoduls TCM, wodurch auch die Anhängerbremsen zuspannen.

In zeitlich umgekehrter Weise könnte bei dem zweiten Störfall auch zunächst das erste elektronische Steuergerät ECU1 ausfallen und zeitlich nachfolgend dann das elektronische Parkbremssteuergerät EPB-ECU, wobei dann die Konsequenzen die gleichen wie oben beschrieben sind.

Gemäß einer Fortbildung können vierte Mittel zum Detektieren eines Ausfalls des ersten elektrischen Energiespeichers 52 und/oder des zweiten elektrischen Energiespeichers 54 vorgesehen sein, welche dann beispielsweise darin bestehen, dass der erste elektrische Energiespeicher 52 und/oder der zweite elektrische Energiespeicher 54 keinen elektrischen Strom mehr liefern können und eine zwangsläufig damit einhergehende Entstromung der jeweils angeschlossenen Verbraucher ein Fehler- oder Störsignal dieser vierten Mittel darstellt. Folglich werden die vierten Mittel hier beispielsweise durch den ersten elektrischen Energiespeicher 52 und/oder den zweiten elektrischen Energiespeicher 54 selbst gebildet.

In einem weiteren Fall kann dann beispielsweise die Steuerlogik, welche Signale von den vierten Mitteln empfängt derart ausgebildet sein, dass sie im Rahmen eines dritten Störfalls einen Ausfall einer einzigen elektrischen Energiequelle 52 oder 54 der beiden voneinander unabhängigen elektrischen Energiequellen 52, 54 detektiert. Dann kann das Fahrzeug bei zunächst lediglich einer ausgefallenen elektrischen Energiequelle 52 oder 54 noch seine Fahrt fortsetzen und auch noch mit einem Betriebsbremskreis automatisch oder durch den Fahrer initiiert bremsen.

Dann wird das elektronische Parkbremssteuergerät EPB-ECU von der Steuerlogik derart gesteuert, dass dieses die erste Ventileinrichtung 10 z.B. in Form der Einlass-/Auslassventilkombination 11 steuert (Einlassventil in Sperrstellung, Auslassventil in Durchlassstellung), um den Arbeitsausgang 24 des Relaisventils RV zu entlüften, was eigentlich zu einem Zuspannen der Federspeicherbremszylinder 8 führen sollte.

Jedoch wird ein Zuspannen der Federspeicherbremszylinder 8 aber (noch) mittels einer Bestromung der dritten Ventileinrichtung 28, z.B. in Form des 3/2-Wege-Magnetventils 28a oder 28b gemäß **Fig.3a** oder **Fig.3b** durch das elektronische Parkbremssteuergerät EPB-ECU verhindert, wobei das bestromte 3/2-Wege-Magnetventil 28a oder 28b den Arbeitsausgang 24 des Relaisventils RV gegenüber dem Arbeitsanschluss 24 und damit gegenüber den Federspeicherbremszylindern 8 absperrt und letztere mit dem Druckluftvorrat 6 verbindet und dadurch belüftet, wodurch diese (noch nicht) zuspannen können. Letztlich wird die Parkbremse dadurch bereits vorbereitet für den Fall, dass auch noch die andere elektrische Energiequelle 52 oder 54 ausfällt.

Weiterhin ist dann die Steuerlogik vorzugsweise ausgebildet, dass sie das elektronische Parkbremssteuergerät EPB-ECU derart steuert, dass die vierte Ventileinrichtung 36 z.B. in Form des Test-Magnetventils bestromt wird. Dies bewirkt, dass der pneumatische Steuereingang 68 des Anhängersteuermoduls TCM durch Verbinden mit dem Druckluftvorrat 6 belüftet wird, was vor dem Hintergrund der üblichen pneumatischen Invertierung der Druckverhältnisse innerhalb eines solchen Anhängersteuermoduls TCM bedeutet, dass die Anhängerbremsen entlüftet und damit ebenfalls deren Zuspannen (zunächst) verhindert wird.

Der dritter Störfall betrifft beispielsweise einen Ausfall einer der beiden elektrischen Energiequellen 52 oder 54, wie oben beschrieben und zeitlich anschließend daran einen Ausfall auch noch der anderen elektrischen Energiequelle 52 oder 54.

Wenn nun in Fortführung des dritten Störfalls nach einiger Zeit auch noch die andere verbleibende elektrischen Energiequelle 52 oder 54 der lediglich zwei voneinander unabhängigen Energiequellen 52, 54 ausfallen sollte, so werden die elektropneumatische Parkbremssteuereinrichtung EPB bzw. das elektronische Parkbremssteuergerät PBM-ECU sowie die dritte Ventileinrichtung 28 und auch die vierte Ventileinrichtung 36 zwangsläufig entstromt, woraufhin das entstromte 3/2-Wege-Magnetventil 28a als dritte Ventileinrichtung 28 gemäß **Fig.3a** oder **Fig.3b** die Federspeicherbremszylinder 8 mit dem Arbeitsausgang 24 des Relaisventils RV verbindet, woraufhin die Federspeicherbremszylinder 8 entlüftet werden und die Parkbremse des Zugfahrzeugs dadurch automatisch zuspannt.

Weil dabei auch das Test-Magnetventil 36 als Beispiel für die vierte Ventileinrichtung entstromt wird, wird der pneumatische Steuereingang 68 des Anhängersteuerventils TCM entlüftet und bedingt durch die pneumatische Invertierung innerhalb des Anhängersteuermoduls TCM werden die Anhängerbremsen belüftet und spannen somit ebenfalls automatisch zu.

Folglich werden sowohl die Federspeicherbremszylinder 8 des Zugfahrzeugs wie auch die Anhängerbremsen des Anhängers bei einem (sukzessiven oder gleichzeitigen) Ausfall beider elektrischer Energieversorgungen 52, 54 automatisch zugespannt und zwar ohne dass der Fahrer oder die Autopiloteinrichtung dies übersteuern oder beeinflussen könnte.

Bei den weiteren im Folgenden beschriebenen Ausführungsformen werden für identische und gleich wirkende Komponenten und Baugruppen die gleichen Bezugszeichen verwendet wie bei der vorangehend beschriebenen Ausführungsform.

Im Unterschied zur Ausführungsform von **Fig.1a** ist bei der Ausführungsform von **Fig.1b** die dritte Ventileinrichtung 28 in das Gehäuse der elektropneumatischen Parkbremssteuereinrichtung integriert, wodurch Leitungen bzw. Verrohrungen eingespart werden. Ansonsten sind der Aufbau und die Funktionalitäten wie oben bereits zu der Ausführungsform von **Fig.1a** beschrieben.

**Fig.4a** und **Fig.4b** zeigen eine weitere Ausführungsform einer dritten Ventileinrichtung 28, welche dann beispielsweise als 2/2-Wege-Magnetventil 28c (**Fig.4a**) bzw. als elektrisch vorgesteuertes 2/2-Wegeventil 28d ausgeführt ist, wobei die elektrische Steuerung jeweils wie bei der Ausführungsform von **Fig.1a** oder **Fig.1b** durch das elektronische Parkbremssteuergerät PBM-ECU vorgenommen wird. Im Unterschied zu dem 3/2-Wege-Magnetventil 28a bzw. dem elektrisch vorgesteuerten 3/2-Wege-Ventil 28b von **Fig.3a** und **Fig.3b** können diese 2/2-Wegeventile 28c, 28d die Federspeicherbremszylinder 8 nicht mit dem Druckluftvorrat 6 verbinden, sondern lediglich die Verbindung zwischen dem Arbeitsausgang 24 und den Federspeicherbremszylindern 8 sperren und damit deren Entlüftung verhindern, was allerdings für diese angestrebte Funktion ausreichend ist.

**Fig.5** zeigt ein schematisches Schaltbild einer weiteren Ausführungsform einer dritten Ventileinrichtung 28 aus einem Select-High-Ventil 84 kombiniert mit einem 2/2-Wegeventil 28e. Dabei sind ein Eingangsanschluss des Select-High-Ventils 84 an den Arbeitsanschluss 24 und ein weiterer Eingangsanschluss mit dem 2/2-Wegeventil 28e verbunden, dessen weiterer Anschluss an den Druckluftvorrat 6 angeschlossen ist. Ein Ausgangsanschluss des Select-High-Ventils 84 ist an die Federspeicherbremszylinder 8 angeschlossen. Bei dem Select-High-Ventil 84 wird er größere der an seinen Eingangsanschlüssen anstehende Druck, also entweder der Druck am Arbeitsanschluss 24 oder der vom 2/2-Wegeventil 28e ausgesteuerte Druck an den Ausgangsanschluss, also an die Federspeicherbremszylinder 8 weiter gesteuert. Dabei schaltet das 2/2-Wegeventil 28e in seiner Durchgangsstellung den Vorratsdruck im Druckluftvorrat an den weiteren Eingangsanschluss des Select-High-Ventils 84 oder sperrt diese Verbindung in seiner Sperrstellung.

Mit dieser weiteren Ausführungsform einer dritten Ventileinrichtung können bereits zugespannte Federspeicherbremszylinder 8 wieder gelöst werden, indem diese über das in Durchgangsstellung geschaltete 2/2-Wege-Magnetventil mit dem Druckluftvorrat 6 verbunden werden.

**Fig.6** zeigt ein schematisches Schaltbild einer weiteren Ausführungsform einer zweiten Ventileinrichtung 16, welche hier beispielsweise aus zwei 2/2-Wege-Magnetventilen 16c, 16d jeweils als "Normally Open" - Magnetventil ausgeführt besteht, wobei jedes der Ventile 16c, 16d einerseits mit einer dritten Drucksenke 86 und vierten Drucksenke 88 und andererseits mit dem pneumatischen Steueranschluss 20 und damit mit dem pneumatischen Steuereingang 22 des Relaisventils RV verbunden ist. Dabei ist jeweils ein solches 2/2-Wege-Magnetventil 16c, 16d von jeweils einer anderen der elektrischen Energiequellen 52 oder 54 durch elektrische Versorgungsleitungen 90, 92 dauerhaft bestromt und befindet sich somit in seiner Sperrstellung. Folglich befinden sich beide 2/2-Wege-Magnetventile 16c, 16d im Ausgangszustand in Sperrstellung, in welcher keine Verbindung zwischen dem pneumatischen Steueranschluss 20 der elektropneumatischen Parkbremssteuereinrichtung EPB bzw. dem pneumatischen Steuereingang 22 des Relaisventils RV und den dritten und vierten Drucksenken 86, 88 der beiden 2/2-Wege-Magnetventile 16c, 16d hergestellt wird.

Die beiden 2/2-Wege-Magnetventile 16c, 16d sind derart verschaltet, dass sie dann, wenn lediglich nur eines der beiden 2/2-Wege-Magnetventile 16c oder 16d entstromt wird, beispielsweise durch einen Ausfall der dieses 2/2-Wege-Magnetventil 16c oder 16d elektrisch stromversorgenden elektrischen Energiequelle 52 oder 54 eine Verbindung zwischen dem Steueranschluss 20 der elektropneumatischen Parkbremssteuereinrichtung EPB bzw. dem pneumatischen Steuereingang 22 des Relaisventils RV und der betreffenden dritten oder vierten Drucksenke 86 oder 88 hergestellt wird. Folglich reicht bei dieser Ausführungsform bereits aus, dass lediglich eine der elektrischen Energiequellen 52 oder 54 ausfällt, um ein automatisches Zuspannen der Federspeicherbremszylinder 8 zu bewirken. Dann können beispielsweise die dritte Ventileinrichtung 28 und die vierte Ventileinrichtung 36 entfallen. Eine Ansteuerung der beiden 2/2-Wege-Magnetventile 16c, 16d durch die beiden elektronischen Steuergeräte ECU1 und ECU2 ist indes hier nicht vorgesehen. Logisch liegt hier daher eine "ODER"-Schaltung im Hinblick auf einen Ausfall der elektrischen Energieversorgungen 52, 54 vor.

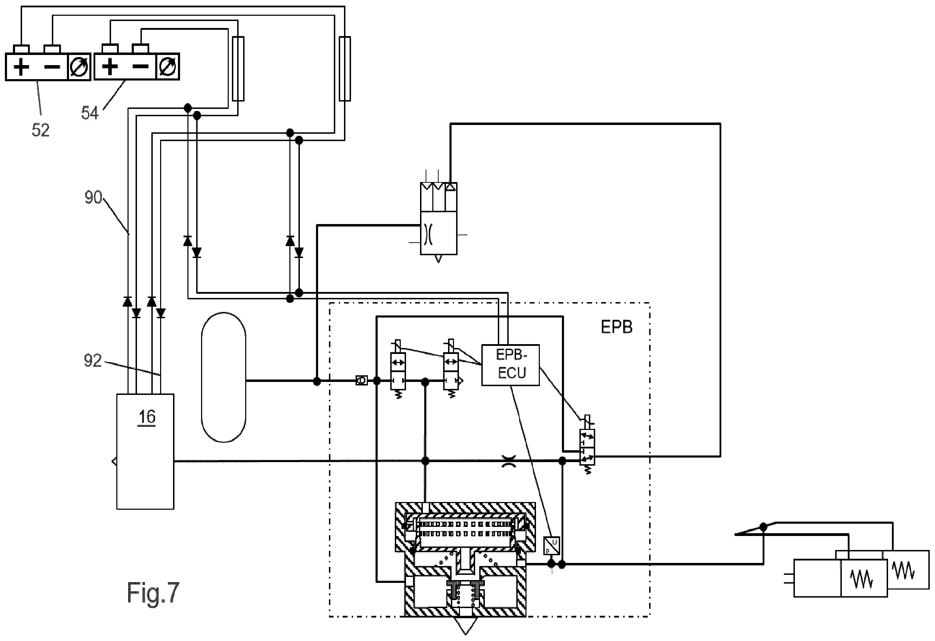

Die Ausführungsform einer zweiten Ventileinrichtung gemäß **Fig.6** kann beispielsweise in der Ausführungsform der elektropneumatischen Ausrüstung von **Fig.7** eingesetzt werden, bei welcher die zweite Ventileinrichtung 16 ebenfalls jeweils von beiden elektrischen Energiequellen 52, 54 dauerhaft bestromt wird, aber eine Ansteuerung der zweiten Ventileinrichtung 16 durch die beiden elektronischen Steuergeräte ECU1 und ECU2 nicht vorgesehen ist.

Alternativ kann die zweite Ventileinrichtung 16 generell oder in **Fig.7** auch wie in **Fig.8** dargestellt ausgeführt werden und umfasst dann wiederum zwei 2/2-Wege-Magnetventile 16e, 16f, wiederum jeweils als "Normally Open" - Magnetventil ausgeführt. Die beiden 2/2-Wege-Magnetventile 16e, 16f sind wiederum dauerhaft durch jeweils eine elektrische Energiequelle 52, 54 mittels elektrischer Versorgungsleitungen 90, 92 dauerhaft bestromt und befinden sich dann jeweils in Sperrstellung. Sie sind aber nun derart verschaltet, dass sie nur dann, wenn beide 2/2-Wege-Magnetventile 16e, 16f entstromt werden, eine Verbindung zwischen dem Steueranschluss 20 der elektropneumatischen Parkbremssteuereinrichtung EPB bzw. dem pneumatischen Steuereingang 22 des Relaisventils RV und einer fünften Drucksenke 94 hergestellt wird. Der Steueranschluss 20 der elektropneumatischen Parkbremssteuereinrichtung EPB bzw. der pneumatische Steuereingang 22 des Relaisventils RV ist hier an einen Anschluss eines ersten 2/2-Wege-Magnetventils 16e angeschlossen, der andere Anschluss des ersten 2/2-Wege-Magnetventils 16e steht mit einem Anschluss des zweiten 2/2-Wege-Magnetventils 16f in Verbindung, mit deren anderem Anschluss die fünfte Drucksenke 94 verbunden ist. Wenn hier daher lediglich eine der elektrischen Energiequellen 52 oder 54 ausfällt, so dass lediglich eines der beiden 2/2-Wege-Magnetventile 16e oder 16f in Durchgangsstellung schaltet, so reicht dies nicht aus, um den Strömungsweg zwischen der fünften Drucksenke 94 und dem pneumatischen Steueranschluss 20 durchzuschalten. Erst wenn beide elektrische Energiequellen 52 und 54 ausfallen, werden beide 2/2-Magnetventile 16e und 16f entstromt, wodurch beide 2/2-Wege-Magnetventile 16e und 16f in Durchgangsstellung schalten, der Steueranschluss 20 der elektropneumatischen Parkbremssteuereinrichtung EPB entlüftet und die Federspeicherbremszylinder 8 dadurch automatisch zuspannen. Logisch liegt hier daher eine "UND"-Schaltung im Hinblick auf einen Ausfall der elektrischen Energieversorgungen 52, 54 vor.

Die Ausführungsform von **Fig.9** unterscheidet sich von der Ausführungsform von **Fig.1a** lediglich darin, dass ein sog. Rohrbruchsicherungsventil 96 verwendet wird, um die Funktion der dritten Ventileinrichtung 28 nachzubilden. Bei manchen Fahrzeugen ist bereits ein solches Rohrbruchsicherungsventil 96 vorhanden, das verhindern soll, dass die Federspeicherbremszylinder 8 bei einer gebrochenen Druckluftleitung zum Federspeicherbremszylinder 8 automatisch zuspannen, was zu einem ungewollten Blockieren der Räder führen könnte. Dieses Rohrbruchsicherungsventil 96 besteht vorzugsweise aus einem von dem elektronischen Parkbremssteuergerät EPB-ECU gesteuerten 3/2-Wege-Magnetventil 98a bzw. 98b (**Fig.10a, Fig.10b**), welches mittels Select-High-Ventilen 100 (**Fig.9**) am Eingang der Federspeicherbremszylinder 8 parallel auf die Federspeicherbremszylinder 8 wirkt und diese dann mit Vorratsdruck beispielsweise aus einem weiteren unabhängigen Druckluftvorrat 102 versorgen kann. Weiterhin besitzt das Rohrbruchsicherungsventil 96 auch eine sechste Drucksenke 104 zum Entlüften der Federspeicherbremszylinder 8

Ein solches in manchen Fällen ohnehin bereits vorhandenes Rohrbruchsicherungsventil 96 kann somit die dritte Ventileinrichtung 28 ersetzen.

Bei der Ausführungsform von **Fig.11** ist die zweite Ventileinrichtung 16 beispielsweise in Form eines 2/2-Wege-Magnetventils 16g, welches als "Normally Open"-Ventil ausgeführt ist, durch ein Bistabil-Ventil 106 ergänzt, wie **Fig.12** zeigt. Dabei ist der eine Anschluss des 2/2-Wege-Magnetventils 16g an den pneumatischen Steueranschluss 20 der elektropneumatischen Parkbremssteuereinrichtung EPB bzw. an den pneumatischen Steuereingang 22 des Relaisventils RV und der andere Anschluss an den einen Anschluss des Bistabil-Ventils 106 angeschlossen, dessen anderer Anschluss wiederum mit einer siebten Drucksenke 108 in Verbindung steht. Das 2/2-Wege-Magnetventil 16g wird über Versorgungsleitungen 90, 92 von beiden separaten elektrischen Energiequellen 52, 54 dauerhaft bestromt, weshalb es sich im Ausgangszustand in Sperrstellung befindet. Erst wenn beide elektrischen Energiequellen 52 und 54 ausfallen, wird das 2/2-Wege-Magnetventil 16d entstromt und schaltet dann in seine Durchgangsstellung.

Das Bistabilventil 106 wird von dem elektronischen Parkbremssteuergerät EPB-ECU gesteuert. Dann kann die Steuerlogik des elektronischen Parkbremssteuergeräts EPB-ECU entscheiden, ob die Parkbremse bei einem Stromausfall automatisch eingelegt werden soll. Die Bistabilität kann z.B. über ein rückgekoppeltes Booster-Ventil, das drucklos in Richtung geschlossen schaltet, realisiert werden. Die dritte Ventileinrichtung 28 und die vierte Ventileinrichtung 36 können dann entfallen.

### Bezugszeichenliste

- EPB: elektropneumatische Parkbremssteuereinrichtung
- EPB-ECU: elektronisches Parkbremssteuergerät
- RV: Relaisventil
- ECU1: erstes elektronisches Steuergerät
- ECU2: zweites elektronisches Steuergerät
- iFBM: Fußbremsmodul

- 1: elektropneumatische Ausrüstung
- 2: elektropneumatische Parkbremseinrichtung
- 4: Gehäuse
- 6: Druckluftvorrat
- 8: Federspeicherbremszylinder
- 10: erste Ventileinrichtung
- 11: Einlass-/Auslassventilkombination
- 12: Vorratsleitung
- 14: Vorratsanschluss
- 16: zweite Ventileinrichtung
- 16 a/c/d: 2/2-Wege-Magnetventile
- 16 e/f/g: 2/2-Wege-Magnetventile
- 18: pneumatische Steuerleitung
- 20: pneumatischer Steueranschluss
- 22: pneumatischer Steuereingang
- 24: Arbeitsausgang
- 26: Arbeitsanschluss
- 28: dritte Ventileinrichtung
- 28 a/b: 3/2-Wege-Magnetventil
- 28 c/d/e: 3/2-Wege-Magnetventil
- 30: Bremsleitung
- 32: Rückkopplungsverbindung
- 34: Drosselelement
- 36: vierte Ventileinrichtung
- 38: Vorratsverbindung
- 40: erste Drucksenke
- 42: zweite Drucksenke
- 44: Parkbremsbetätigungseinrichtung
- 46: Parkbremsbetätigungsorgan
- 48: Signalleitung
- 50: Signalanschluss
- 52: erste elektrische Energiequelle
- 54: zweite elektrische Energiequelle
- 56: elektrische Versorgungsleitungen
- 58: elektrische Steuerleitungen
- 60: Kreistrennungs-Dioden
- 62: Stromsicherungen
- 64: Anhängeranschluss
- 66: pneumatische Leitung
- 68: pneumatischer Steuereingang
- 70: Arbeitsausgang
- 72: Vorratsleitung
- 74: Steuerleitung
- 76: Steuerleitung
- 78: Drucksensor
- 80: Bremspedal
- 82: Magnetventileinrichtung
- 84: Select-High-Ventil
- 86: dritte Drucksenke
- 88: vierte Drucksenke
- 90: elektrische Versorgungsleitungen
- 92: elektrische Versorgungsleitungen
- 94: fünfte Drucksenke
- 96: Rohrbrucksicherungsventil
- 98 a/b: 3/2-Wege-Magnetventil
- 100: Select-High-Ventil
- 102: weiterer Druckluftvorrat
- 104: sechste Drucksenke
- 106: Bistabil-Ventil
- 108: siebte Drucksenke

## Patentansprüche

1. Elektropneumatische Ausrüstung (1) eines Fahrzeugs beinhaltend
a) eine elektropneumatische Parkbremseinrichtung (2) mit einer elektropneumatischen Parkbremssteuereinrichtung (EPB), wenigstens einem Druckluftvorrat (6, 102) und wenigstens einem pneumatischen Federspeicherbremszylinder (8), wobei
b) die elektropneumatische Parkbremssteuereinrichtung (EPB) ein elektronisches Parkbremssteuergerät (EPB-ECU), eine wenigstens ein erstes Magnetventil (11) und wenigstens ein von diesem druckgesteuertes Ventil (RV) umfassende erste Ventileinrichtung (10) aufweist, bei welcher das wenigstens eine erste Magnetventil (11) von dem elektronischen Parkbremssteuergerät (EPB-ECU) gesteuert ist, wobei
c) ein pneumatischer Steuereingang (20) des druckgesteuerten Ventils (RV) an das wenigstens eine erste Magnetventil (11) angeschlossen ist und ein Arbeitsausgang (24) des druckgesteuerten Ventils (RV) mit dem wenigstens einen Federspeicherbremszylinder (8) in Verbindung bringbar ist, und wobei
d) das wenigstens eine erste Magnetventil (11) weiterhin an den wenigstens einen Druckluftvorrat (6) und an eine Drucksenke (40) angeschlossen ist, wobei
e) das wenigstens eine erste Magnetventil (11) ausgebildet ist, dass es abhängig von der Steuerung durch das elektronische Parkbremssteuergerät (EPB-ECU) den pneumatischen Steuereingang (20) des druckgesteuerten Ventils (RV) mit dem wenigstens einen Druckluftvorrat (6) oder mit der Drucksenke (40) verbindet, und wobei
f) das druckgesteuerte Ventil (RV) ausgebildet ist, dass es bei einer Entlüftung seines pneumatischen Steuereingangs (20) seinen Arbeitsausgang (24) entlüftet und bei einer Belüftung seines pneumatischen Steuereingangs (20) seinen Arbeitsausgang (24) belüftet, sowie
g) beinhaltend eine wenigstens ein zweites Magnetventil (16a; 16c, 16d; 16e, 16f; 16g) aufweisende zweite Ventileinrichtung (16), welche an den pneumatischen Steuereingang (20) des druckgesteuerten Ventils (RV) der ersten Ventileinrichtung (16) angeschlossen und ausgebildet ist, dass sie abhängig von einer Bestromung oder Entstromung des wenigstens einen zweiten Magnetventils (16a; 16c, 16d; 16e, 16f; 16g) den pneumatischen Steuereingang (20) des druckgesteuerten Ventils (RV) mit einer weiteren Drucksenke (42; 86, 88; 94; 108) verbindet oder eine solche Verbindung sperrt, **dadurch gekennzeichnet, dass**
h) die elektropneumatische Parkbremssteuereinrichtung (EPB) durch lediglich zwei voneinander unabhängige elektrische Energiequellen (52, 54), einer ersten elektrischen Energiequelle (52) und einer zweiten elektrischen Energiequelle (54) mit elektrischer Energie versorgt ist, und dass
i) das wenigstens eine zweite Magnetventil (16a; 16c, 16d; 16e, 16f; 16g) der zweiten Ventileinrichtung (16) durch lediglich die beiden voneinander unabhängigen elektrischen Energiequellen (52, 54) oder durch zwei voneinander unabhängige elektronische Steuergeräte (ECU1, ECU2) bestrombar oder entstrombar ist, von welchen ein erstes elektronisches Steuergerät (ECU1) und ein zweites elektronisches Steuergerät (ECU2) von einer jeweils anderen elektrischen Energiequelle (52 oder 54) der lediglich zwei voneinander unabhängigen elektrischen Energiequellen (52, 54) mit elektrischer Energie versorgt ist.

2. Elektropneumatische Ausrüstung nach Anspruch 1, **dadurch gekennzeichnet dass** die lediglich zwei voneinander unabhängigen elektrischen Energiequellen (52, 54) jeweils ein elektronisches Steuergerät (ECU1, ECU2) mit elektrischer Energie versorgen, nämlich eine erste elektrische Energiequelle (52) das erste elektronische Steuergerät (ECU1) und eine zweite elektrische Energiequelle (54) das zweite elektronische Steuergerät (ECU2).

3. Elektropneumatische Ausrüstung nach Anspruch 1 oder 2, **dadurch gekennzeichnet dass** das erste elektronische Steuergerät (ECU1) und das zweite elektronische Steuergerät (ECU2) ausgebildet sind, dass ein Ausfall eines der Steuergeräte (ECU1 oder ECU2) die Funktion des jeweils anderen Steuergeräts (ECU1 oder ECU2) nicht beeinflusst.

4. Elektropneumatische Ausrüstung nach einem der vorhergehenden Ansprüche, **dadurch gekennzeichnet dass**
a) erste Mittel zum Detektieren eines Ausfalls des elektronischen Parkbremssteuergeräts (EPB-ECU), und
b) zweite Mittel zum Detektieren eines Fahrzustands des Fahrzeugs hinsichtlich Fahren oder Stillstand vorgesehen sind, wobei die ersten Mittel und die zweiten Mittel von wenigstens einer elektrischen Energiequelle (52, 54) der beiden voneinander unabhängigen Energiequellen (52, 54) mit elektrischer Energie versorgt sind, sowie
c) eine in wenigstens einem elektronischen Steuergerät (ECU1, ECU2, EPB-ECU) implementierte Steuerlogik, welche Signale von den ersten Mitteln und den zweiten Mitteln empfängt und welche derart ausgebildet ist, dass sie
d) bei einem detektierten Stillstand des Fahrzeugs und bei einem detektierten Ausfall des elektronischen Parkbremssteuergeräts (EPB-ECU) das erste elektronische Steuergerät (ECU1) und/oder das zweite elektronische Steuergerät (ECU2) steuert, dass diese(s) das wenigstens eine zweite Magnetventil (16a; 16c, 16d; 16e, 16f; 16g) der zweiten Ventileinrichtung (16) steuern(t), um den pneumatischen Steuereingang (20) des druckgesteuerten Ventils (RV) der Parkbremssteuereinrichtung (EPB) mit der weiteren Drucksenke (42; 86, 88; 94; 108) zu verbinden.

5. Elektropneumatische Ausrüstung nach einem der vorhergehenden Ansprüche, **dadurch gekennzeichnet dass**
a) erste Mittel zum Detektieren eines Ausfalls des elektronischen Parkbremssteuergeräts (EPB-ECU), und
b) zweite Mittel zum Detektieren eines Fahrzustands des Fahrzeugs hinsichtlich Fahren oder Stillstand, und
c) dritte Mittel zum Detektieren eines Ausfalls des ersten elektronischen Steuergeräts (ECU1) und/oder des zweiten elektronischen Steuergeräts (ECU2) vorgesehen sind, wobei die ersten Mittel, die zweiten Mittel und die dritten Mittel von wenigstens einer elektrischen Energiequelle der beiden voneinander unabhängigen Energiequellen (52, 54) mit elektrischer Energie versorgt sind, sowie
d) eine in wenigstens einem, von wenigstens einer elektrischen Energiequelle (52, 54) der beiden voneinander unabhängigen Energiequellen (52, 54) mit elektrischer Energie versorgten elektronischen Steuergerät (ECU1, ECU2, EPB-ECU) implementierte Steuerlogik, welche Signale von den ersten Mitteln, von den zweiten Mitteln und von den dritten Mitteln empfängt und welche derart ausgebildet ist, dass sie
e) bei einem detektierten Stillstand des Fahrzeugs und bei einem detektierten Ausfall einerseits des ersten elektronischen Steuergeräts (ECU1) oder des zweiten elektronischen Steuergeräts (ECU2) und andererseits des elektronischen Parkbremssteuergeräts (EPB-ECU) das jeweils intakt verbliebene elektronische Steuergerät (ECU1 oder ECU2) der beiden elektronischen Steuergeräte (ECU1, ECU2) derart steuert, dass dieses intakt verbliebene elektronische Steuergerät (ECU1 oder ECU2) das wenigstens eine zweite Magnetventil (16a; 16c, 16d; 16e, 16f; 16g) der zweiten Ventileinrichtung (16) steuert, um den pneumatischen Steuereingang (20) des druckgesteuerten Ventils (RV) mit der weiteren Drucksenke (42; 86, 88; 94; 108) zu verbinden.

6. Elektropneumatische Ausrüstung nach einem der vorhergehenden Ansprüche, **dadurch gekennzeichnet dass** eine dritte, wenigstens ein von dem elektronischen Parkbremssteuergerät (EPB-ECU) gesteuertes drittes Magnetventil (28a, 28b; 28c, 28d; 28e) aufweisende Ventileinrichtung (28) vorgesehen ist, welche an den Arbeitsausgang (24) des druckgesteuerten Ventils (RV), an wenigstens einen Druckluftvorrat (6) sowie an den wenigstens einen Federspeicherbremszylinder (8) angeschlossen und ausgebildet ist, dass sie bei einer Entstromung des wenigstens einen dritten Magnetventils (28a, 28b; 28c, 28d; 28e) durch das elektronische Parkbremssteuergerät (EPB-ECU) den wenigstens einen Federspeicherbremszylinder (8) mit dem Arbeitsausgang (24) des druckgesteuerten Ventils (RV) verbindet und bei einer Bestromung des wenigstens einen dritten Magnetventils (28a, 28b; 28c, 28d; 28e) durch das elektronische Parkbremssteuergerät (EPB-ECU) eine solche Verbindung sperrt und dann den wenigstens einen Federspeicherbremszylinder (8) mit dem wenigstens einem Druckluftvorrat (6, 120) verbindet oder den Druck in dem wenigstens einen Federspeicherbremszylinder (8) absperrt.

7. Elektropneumatische Ausrüstung nach einem der vorhergehenden Ansprüche, **dadurch gekennzeichnet dass** eine vierte, wenigstens ein von dem elektronischen Parkbremssteuergerät (EPB-ECU) gesteuertes viertes Magnetventil (36) aufweisende Ventileinrichtung vorgesehen ist, welche an einen pneumatischen Steueranschluss (68) eines elektropneumatischen Anhängersteuermoduls (TCM), an wenigstens einen Druckluftvorrat (6) sowie an den Arbeitsausgang (24) des druckgesteuerten Ventils (RV) angeschlossen und ausgebildet ist, dass sie bei einer Entstromung des wenigstens einen vierten Magnetventils (36) durch das elektronische Parkbremssteuergerät (EPB-ECU) eine Verbindung zwischen dem pneumatischen Steueranschluss (68) des elektropneumatischen Anhängersteuermoduls (TCM) mit dem Arbeitsausgang (24) des druckgesteuerten Ventils (RV) herstellt und bei einer Bestromung des wenigstens einen vierten Magnetventils eine solche Verbindung sperrt und eine Verbindung zwischen dem wenigstens einen Druckluftvorrat (6) und dem pneumatischen Steueranschluss (68) des elektropneumatischen Anhängersteuermoduls (TCM) herstellt.

8. Elektropneumatische Ausrüstung nach Anspruch 7, **dadurch gekennzeichnet dass** das elektropneumatische Anhängersteuermodul (TCM) einen pneumatischen Anschluss (70) für eine pneumatische oder elektropneumatische Bremseinrichtung eines Anhängers des Fahrzeugs aufweist und ausgebildet ist, dass es bei einer Belüftung seines pneumatischen Steueranschlusses (68) den pneumatischen Anschluss (70) entlüftet und bei einer Entlüftung seines pneumatischen Steueranschlusses (68) den pneumatischen Anschluss (70) belüftet.

9. Elektropneumatische Ausrüstung nach Anspruch 7 oder 8, **dadurch gekennzeichnet dass** das wenigstens eine vierte Magnetventil (36) durch ein Test-Magnetventil gebildet wird, welches für einen Test vorgesehen ist, ob das über den wenigstens einen Federspeicherbremszylinder (8) eingebremste Zugfahrzeug eine Kombination aus dem Zugfahrzeug und einem Anhänger bei ungebremstem Anhänger im Stillstand halten kann.

10. Elektropneumatische Ausrüstung nach Anspruch 6 und einem der Ansprüche 7 bis 9, **dadurch gekennzeichnet dass** das wenigstens eine dritte Magnetventil (28a, 28b; 28c, 28d, 28e) und/oder das wenigstens eine vierte Magnetventil (36) jeweils durch eines der folgenden Ventile gebildet wird oder ein solches Ventil beinhaltet:
a) ein 3/2-Wege-Magnetventil (28a, 28b; 36; 96),
b) ein 2/2-Wege-Magnetventil (28c, 28d; 28e),
c) eine Kombination aus einem 2/2-Wege-Magnetventil (28e) und einem Select-High-Ventil (84),
d) ein Rohrbruchsicherungsventil (96).

11. Elektropneumatische Ausrüstung nach Anspruch 6, **dadurch gekennzeichnet, dass**
a) vierte Mittel zum Detektieren eines Ausfalls des ersten elektrischen Energiespeichers (52) und/oder des zweiten elektrischen Energiespeichers (54) vorgesehen sind, sowie
b) eine in wenigstens einem, von wenigstens einer elektrischen Energiequelle der beiden voneinander unabhängigen Energiequellen (52, 54) mit elektrischer Energie versorgten elektronischen Steuergerät implementierte Steuerlogik, welche Signale von den vierten Mitteln empfängt und welche derart ausgebildet ist, dass sie
c) bei einem detektierten Ausfall einer einzigen elektrischen Energiequelle (52 oder 54) der beiden voneinander unabhängigen elektrischen Energiequellen (52, 54) das elektronische Parkbremssteuergerät (EPB-ECU) derart steuert, dass das wenigstens eine dritte Magnetventil (28a, 28b; 28c, 28d, 28e) der dritten Ventileinrichtung (28) bestromt wird.

12. Elektropneumatische Ausrüstung nach Anspruch 11 und einem der Ansprüche 7 bis 9, **dadurch gekennzeichnet dass** die Steuerlogik weiterhin ausgebildet ist, dass sie bei einem detektierten Ausfall einer einzigen elektrischen Energiequelle (52 oder 54) der beiden voneinander unabhängigen elektrischen Energiequellen (52, 54) das elektronische Parkbremssteuergerät (EPB-ECU) derart steuert, dass das wenigstens eine vierte Magnetventil (36) der vierten Ventileinrichtung bestromt wird.

13. Elektropneumatische Ausrüstung nach Anspruch 11 oder 12, **dadurch gekennzeichnet dass** bei einem Ausfall der weiteren elektrischen Energiequelle (52 oder 54) der lediglich zwei voneinander unabhängigen Energiequellen (52, 54) das elektronische Parkbremssteuergerät (EPB-ECU) sowie das wenigstens eine dritte Magnetventil (28a, 28b; 28c, 28d, 28e) der dritten Ventileinrichtung (28) entstromt sind, woraufhin das wenigstens eine dritte Magnetventil (28a, 28b; 28c, 28d, 28e) der dritten Ventileinrichtung (28) den wenigstens einen Federspeicherbremszylinder (8) mit dem Arbeitsausgang (24) des druckgesteuerten Ventils (RV) verbindet.

14. Elektropneumatische Ausrüstung nach Anspruch 13 und einem der Ansprüche 7 bis 9, **dadurch gekennzeichnet dass** die Steuerlogik ausgebildet ist, dass bei einem Ausfall einer weiteren elektrischen Energiequelle (52 oder 54) der lediglich zwei voneinander unabhängigen Energiequellen (52, 54) das wenigstens eine vierte Magnetventil (36) der vierten Ventileinrichtung entstromt wird.

15. Elektropneumatische Ausrüstung nach einem der Ansprüche 4, 5, 11 oder 12, **dadurch gekennzeichnet, dass** die Steuerlogik jeweils in dem elektronischen Parkbremssteuergerät (EPB-ECU), dem ersten elektronischen Steuergerät (ECU1) und in dem zweiten elektronischen Steuergerät (ECU2) implementiert ist.

16. Elektropneumatische Ausrüstung nach einem der vorhergehenden Ansprüche, **dadurch gekennzeichnet, dass** das druckgesteuerte Ventil (RV) durch ein Relaisventil gebildet wird, welches mit einem Vorratsanschluss an den wenigstens einen Druckluftvorrat (6) angeschlossen ist.

17. Elektropneumatische Ausrüstung nach Anspruch 16, **dadurch gekennzeichnet, dass** zwischen dem Arbeitsausgang (24) des Relaisventils und dem pneumatischen Steuereingang (20) des Relaisventils eine pneumatische Rückkopplungsverbindung (32) gezogen ist.

18. Elektropneumatische Ausrüstung nach Anspruch 17, **dadurch gekennzeichnet, dass** in der pneumatischen Rückkopplungsverbindung (32) wenigstens ein pneumatisches Drosselelement (34) angeordnet ist.

19. Elektropneumatische Ausrüstung nach einem der vorhergehenden Ansprüche, **dadurch gekennzeichnet, dass** die zweite Ventileinrichtung (16) wenigstens ein elektrisch gesteuertes 2/2-Wegeventil (16a; 16c, 16d; 16e, 16f; 16g) beinhaltet, welches
a) bestromt eine Durchgangsstellung einnimmt, in welcher ein erster Anschluss mit einem zweiten Anschluss verbunden ist, und welches unbestromt eine Sperrstellung einnimmt, in welcher diese Verbindung gesperrt ist, oder welches
b) unbestromt eine Durchgangsstellung einnimmt, in welcher ein erster Anschluss mit einem zweiten Anschluss verbunden ist, und welches bestromt eine Sperrstellung einnimmt, in welcher diese Verbindung gesperrt ist.

20. Elektropneumatische Ausrüstung nach Anspruch 19, **dadurch gekennzeichnet, dass** die zweite Ventileinrichtung (16) lediglich ein elektrisch gesteuertes 2/2-Wegeventil (16a) beinhaltet, von welchem ein erster Anschluss mit dem pneumatischen Steuereingang (22) des druckgesteuerten Ventils (RV) und ein zweiter Anschluss mit der weiteren Drucksenke (42) verbunden oder verbindbar ist und welches von dem ersten elektronischen Steuergerät (ECU1) und unabhängig davon von dem zweiten elektronischen Steuergerät (ECU2) oder von den beiden elektrischen Energiequellen (52, 54) elektrisch gesteuert ist.

21. Elektropneumatische Ausrüstung nach Anspruch 19 oder 20, **dadurch gekennzeichnet, dass** die zweite Ventileinrichtung (16) zwei elektrisch gesteuerte 2/2-Wegeventile (16c, 16d; 16e, 16f; 16g) oder ein einziges 2/2-Wege-Magnetventil (16a) mit zwei Spulen beinhaltet, wobei
a) ein erstes 2/2-Wegeventil (16c; 16e) oder eine erste Spule des einzigen 2/2-Wege-Magnetventils (16a) von der ersten Energiequelle (52) bestromt ist und ein zweites 2/2-Wegeventil (16d; 16f) oder eine zweite Spule des einzigen 2/2-Wege-Magnetventils (16a) von der zweiten Energiequelle (54) bestromt ist, und wobei
b) das einzige 2/2-Wege-Magnetventil (16a) oder das erste 2/2-Wegeventil (16c; 16e) und das zweite 2/2-Wegeventil (16d; 16f) derart mit dem pneumatischen Steuereingang (22) des druckgesteuerten Ventils (RV) und mit der weiteren Drucksenke (42; 86, 88; 94; 108) verschaltet ist, dass lediglich bei einem Ausfall beider elektrischer Energiequellen (52, 54) der pneumatischen Steuereingang (22) des druckgesteuerten Ventils (RV) mit der weiteren Drucksenke (42; 86, 88; 94; 108) verbunden oder verbindbar ist und ansonsten, d.h. bei einem Ausfall lediglich einer der beiden voneinander unabhängigen elektrischen Energiequellen (52, 54) oder bei intakten beiden voneinander unabhängigen elektrischen Energiequellen (52, 54) eine solche Verbindung gesperrt ist.

22. Elektropneumatische Ausrüstung nach Anspruch 19, **dadurch gekennzeichnet, dass** die zweite Ventileinrichtung (16) wenigstens ein elektrisch gesteuertes 2/2-Wegeventil (16g) beinhaltet, welches unbestromt eine Durchgangsstellung einnimmt, in welcher ein erster Anschluss mit einem zweiten Anschluss verbunden ist, und welches bestromt eine Sperrstellung einnimmt, in welcher diese Verbindung gesperrt ist, wobei weiterhin ein Bistabilventil (106) als von dem elektronischen Parkbremssteuergerät (EPB-ECU) gesteuertes 2/2-Wege-Magnetventil vorgesehen ist, welches von den lediglich beiden elektrischen Energiequellen (52, 54) bestromt ist und welches mit dem elektrisch gesteuerten 2/2-Wegeventil (16g) derart verschaltet ist, dass lediglich bei einem Ausfall beider elektrischer Energiequellen (52, 54) der pneumatische Steuereingang (22) des druckgesteuerten Ventils (RV) mit der weiteren Drucksenke (108) verbunden ist und ansonsten, d.h. bei einem Ausfall lediglich einer der beiden voneinander unabhängigen elektrischen Energiequellen (52, 54) oder bei intakten beiden voneinander unabhängigen elektrischen Energiequellen (52, 54) eine solche Verbindung gesperrt ist.

23. Elektropneumatische Ausrüstung nach einem der vorhergehenden Ansprüche, **dadurch gekennzeichnet, dass** das wenigstens eine erste Magnetventil (11) durch eine Kombination von zwei 2/2-Wege-Magnetventilen als Einlass-/Auslassventilkombination gebildet wird.

24. Elektropneumatische Ausrüstung nach einem der vorhergehenden Ansprüche, **dadurch gekennzeichnet, dass** das erste elektronische Steuergerät (ECU1) und das zweite elektronische Steuergerät (ECU2) jeweils durch eines der folgenden elektronischen Steuergeräte gebildet wird:
a) Ein elektronisches Steuergerät (EBS-ECU), welches ein elektronisch geregeltes elektropneumatisches Betriebsbremssystem (EBS) des Fahrzeugs steuert oder regelt,
b) ein elektronisches Steuergerät (ECU2), welches einerseits eine Auswerteeinrichtung für Signale eines mit einem Bremspedal (80) zusammen wirkenden Bremswertgebers eines elektropneumatischen Fußbremsmoduls (iFBM) darstellt und welches anderseits eine Magnetventileinrichtung steuert, durch welche eine pneumatische Steuerkammer des elektropneumatischen Fußbremsmoduls (iFBM) be- oder entlüftet, mit welcher wenigstens ein pneumatischer Kanal des Fußbremsmoduls (iFBM) betätigbar ist,
c) ein elektronisches Steuergerät, welches eine elektrische Lenkeinrichtung des Fahrzeugs steuert,
d) ein elektronisches Steuergerät, welches ein Fahrerassistenzsystem des Fahrzeugs steuert,
e) ein elektronisches Steuergerät, welches eine Autopiloteinrichtung des Fahrzeugs steuert, mit welcher ein teilautonomes oder autonomes Fahren realisiert ist,
f) ein elektronisches Steuergerät, welches eine Druckluftaufbereitungseinrichtung für Druckluftverbraucher des Fahrzeugs steuert,
g) ein elektronisches Steuergerät, welches eine Luftfederungseinrichtung des Fahrzeugs steuert,
h) ein elektronisches Steuergerät, welche einen zentralen Fahrzeugrechner des Fahrzeugs bildet.

25. Elektropneumatische Ausrüstung nach einem der Ansprüche 4, 5 und 11, **dadurch gekennzeichnet, dass**
a) die ersten Mittel zum Detektieren eines Ausfalls des elektronischen Parkbremssteuergeräts (EPB-ECU), und/oder
b) die dritten Mittel zum Detektieren eines Ausfalls des ersten elektronischen Steuergeräts (ECU1) und/oder des zweiten elektronischen Steuergeräts (ECU2), und/oder
c) die vierten Mittel zum Detektieren eines Ausfalls des ersten elektrischen Energiespeichers (52) und/oder des zweiten elektrischen Energiespeichers (54)
eine Detektion durch Eigenüberwachung oder eine Detektion durch Fremdüberwachung beinhalten.

26. Elektropneumatische Ausrüstung nach einem der vorhergehenden Ansprüche, **dadurch gekennzeichnet, dass** wenigstens das elektronische Parkbremssteuergerät (EPB-ECU), die erste Ventileinrichtung (10) samt dem wenigstens einen ersten Magnetventil (11) und das druckgesteuerte Ventil (RV) in einem gemeinsamen Gehäuse (4) der Parkbremssteuereinrichtung (EPB) integriert sind.

27. Elektropneumatische Ausrüstung nach Anspruch 26, **dadurch gekennzeichnet, dass** das wenigstens eine zweite Magnetventil (16a; 16c, 16d; 16e, 16f; 16g), das wenigstens eine dritte Magnetventil (28a, 28b; 28c, 28d, 28e) und/oder das wenigstens eine vierte Magnetventil (36) in dem Gehäuse (4) der Parkbremssteuereinrichtung (EPB) integriert ist (sind) oder an dem Gehäuse (4) der Parkbremssteuereinrichtung (EPB) angeflanscht ist (sind).

28. Elektropneumatische Ausrüstung nach einem der vorhergehenden Ansprüche, **dadurch gekennzeichnet, dass** die erste elektrische Energiequelle (52) und die zweite elektrische Energiequelle (54) jeweils durch Kreistrennungs-Dioden (60) und/oder durch in Reihe dazu geschaltete Stromsicherungen (62) und/oder durch Relais voneinander entkoppelt sind.

29. Elektropneumatische Ausrüstung nach einem der vorhergehenden Ansprüche, **dadurch gekennzeichnet, dass** sie ein elektronisch geregeltes elektropneumatisches Betriebsbremssystem (EBS) beinhaltet, bei welchem der Betriebsbremsdruck auf einen Sollwert geregelt wird.

30. Elektropneumatische Ausrüstung nach einem der vorhergehenden Ansprüche, **dadurch gekennzeichnet, dass** die beiden elektrischen Energiequellen (52, 54) jeweils einen elektrischen oder elektropneumatischen Betriebsbremskreis mit elektrischer Energie versorgen.

31. Fahrzeug mit einer elektropneumatischen Ausrüstung nach einem der vorhergehenden Ansprüche.

## Claims

1. Electropneumatic equipment (1) of a vehicle including
a) an electropneumatic parking brake device (2) having an electropneumatic parking brake control device (EPB), at least one compressed air supply (6, 102) and at least one pneumatic spring-type brake cylinder (8), wherein
b) the electropneumatic parking brake control device (EPB) has an electronic parking brake control unit (EPB-ECU), a first valve device (10) comprising at least one first solenoid valve (11) and at least one valve (RV) pressure controlled thereby, in which the at least one first solenoid valve (11) is controlled by the electronic parking brake control unit (EPB-ECU), wherein
c) a pneumatic control input (20) of the pressure-controlled valve (RV) is connected to the at least one first solenoid valve (11) and a working output (24) of the pressure-controlled valve (RV) can be connected to the at least one spring-type brake cylinder (8), and wherein
d) the at least one first solenoid valve (11) is furthermore connected to the at least one compressed air supply (6) and to a pressure sink (40), wherein
e) the at least one first solenoid valve (11) is designed such that in dependence on the control by the electronic parking brake control unit (EPB-ECU), it connects the pneumatic control input (20) of the pressure-controlled valve (RV) to the at least one compressed air supply (6) or to the pressure sink (40), and wherein
f) the pressure-controlled valve (RV) is designed such that in the event of deaeration of its pneumatic control input (20), it deaerates its working output (24) and in the event of aeration of its pneumatic control input (20), it aerates its working output (24), and
g) including a second valve device (16) having at least one second solenoid valve (16a; 16c, 16d; 16e, 16f; 16g), which is connected to the pneumatic control input (20) of the pressure-controlled valve (RV) of the first valve device (16) and is designed such that in dependence on energizing or deenergizing of the at least one second solenoid valve (16a; 16c, 16d; 16e, 16f; 16g), it connects the pneumatic control input (20) of the pressure-controlled valve (RV) to a further pressure sink (42; 86, 88; 94; 108) or blocks such a connection, **characterized in that**
h) the electropneumatic parking brake control device (EPB) is supplied with electrical energy by only two electrical energy sources (52, 54) independent of one another, a first electrical energy source (52) and a second electrical energy source (54), and **in that**
i) the at least one second solenoid valve (16a; 16c, 16d; 16e, 16f; 16g) of the second valve device (16) can be energized or deenergized by only the two electrical energy sources (52, 54) independent of one another or by two electronic control units (ECU1, ECU2) independent of one another, of which a first electronic control unit (ECU1) and a second electronic control unit (ECU2) is supplied with electrical energy by a respective other electrical energy source (52 or 54) of the only two electrical energy sources (52, 54) independent of one another.

2. Electropneumatic equipment according to Claim 1, **characterized in that** the only two electrical energy sources (52, 54) independent of one another each supply one electronic control unit (ECU1, ECU2) with electrical energy, namely a first electrical energy source (52) supplies the first electronic control unit (ECU1) and a second electrical energy source (54) supplies the second electronic control unit (ECU2) .

3. Electropneumatic equipment according to Claim 1 or 2, **characterized in that** the first electronic control unit (ECU1) and the second electronic control unit (ECU2) are designed such that a failure of one of the control units (ECU1 or ECU2) does not influence the function of the respective other control unit (ECU1 or ECU2).

4. Electropneumatic equipment according to any one of the preceding claims, **characterized in that**
a) first means for detecting a failure of the electronic parking brake control unit (EPB-ECU), and
b) second means for detecting a travel state of the vehicle with respect to travel or standstill are provided, wherein the first means and the second means are supplied with electrical energy by at least one electrical energy source (52, 54) of the two energy sources (52, 54) independent of one another, and
c) a control logic implemented in at least one electronic control unit (ECU1, ECU2, EPB-ECU), which receives signals from the first means and the second means and which is designed in such a way that
d) in the event of a detected standstill of the vehicle and in the event of a detected failure of the electronic parking brake control unit (EPB-ECU), it controls the first electronic control unit (ECU1) and/or the second electronic control unit (ECU2) such that it/they control(s) the at least one second solenoid valve (16a; 16c, 16d; 16e, 16f; 16g) of the second valve device (16) to connect the pneumatic control input (20) of the pressure-controlled valve (RV) of the parking brake control device (EPB) to the further pressure sink (42; 86, 88; 94; 108).

5. Electropneumatic equipment according to any one of the preceding claims, **characterized in that**
a) first means for detecting a failure of the electronic parking brake control unit (EPB-ECU), and
b) second means for detecting a travel state of the vehicle with respect to travel or standstill, and
c) third means for detecting a failure of the first electronic control unit (ECU1) and/or the second electronic control unit (ECU2) are provided, wherein the first means, the second means, and the third means are supplied with electrical energy by at least one electrical energy source of the two energy sources (52, 54) independent of one another, and
d) a control logic implemented in at least one electronic control unit (ECU1, ECU2, EPB-ECU) supplied with electrical energy by at least one electrical energy source (52, 54) of the two energy sources (52, 54) independent of one another, which receives signals from the first means, from the second means, and from the third means and which is designed in such a way that
e) in the event of a detected standstill of the vehicle and in the event of a detected failure of the first electronic control unit (ECU1) or the second electronic control unit (ECU2), on the one hand, and the electronic parking brake control unit (EPB-ECU), on the other hand, it controls the respective intact remaining electronic control unit (ECU1 or ECU2) of the two electronic control units (ECU1, ECU2) in such a way that this intact remaining electronic control unit (ECU1 or ECU2) controls the at least one second solenoid valve (16a; 16c, 16d; 16e, 16f; 16g) of the second valve device (16) to connect the pneumatic control input (20) of the pressure-controlled valve (RV) to the further pressure sink (42; 86, 88; 94; 108).

6. Electropneumatic equipment according to any one of the preceding claims, **characterized in that** a third valve device (28), having at least one third solenoid valve (28a, 28b; 28c, 28d; 28e) controlled by the electronic parking brake control unit (EPB-ECU), is provided, which is connected to the working output (24) of the pressure-controlled valve (RV), to at least one compressed air supply (6), and to the at least one spring-type brake cylinder (8) and is designed such that in the event of deenergization of the at least one third solenoid valve (28a, 28b; 28c, 28d; 28e) by the electronic parking brake control unit (EPB-ECU), it connects the at least one spring-type brake cylinder (8) to the working output (24) of the pressure-controlled valve (RV) and in the event of energization of the at least one third solenoid valve (28a, 28b; 28c, 28d; 28e) by the electronic parking brake control unit (EPB-ECU), it blocks such a connection and then connects the at least one spring-type brake cylinder (8) to the at least one compressed air supply (6, 120) or blocks the pressure in the at least one spring-type brake cylinder (8).

7. Electropneumatic equipment according to any one of the preceding claims, **characterized in that** a fourth valve device, having at least one fourth solenoid valve (36) controlled by the electronic parking brake control unit (EPB-ECU), is provided, which is connected to a pneumatic control fitting (68) of an electropneumatic trailer control module (TCM), to at least one compressed air supply (6), and to the working output (24) of the pressure-controlled valve (RV) and is designed such that in the event of deenergization of the at least one fourth solenoid valve (36) by the electronic parking brake control unit (EPB-ECU), it establishes a connection between the pneumatic control fitting (68) of the electropneumatic trailer control module (TCM) and the working output (24) of the pressure-controlled valve (RV) and in the event of energization of the at least one fourth solenoid valve, it blocks such a connection and establishes a connection between the at least one compressed air supply (6) and the pneumatic control fitting (68) of the electropneumatic trailer control module (TCM).

8. Electropneumatic equipment according to Claim 7, **characterized in that** the electropneumatic trailer control module (TCM) has a pneumatic fitting (70) for a pneumatic or electropneumatic brake device of a trailer of the vehicle and is designed such that in the event of aeration of its pneumatic control fitting (68), it deaerates the pneumatic fitting (70) and in the event of deaeration of its pneumatic control fitting (68), it aerates the pneumatic fitting (70).

9. Electropneumatic equipment according to Claim 7 or 8, **characterized in that** the at least one fourth solenoid valve (36) is formed by a test solenoid valve, which is provided for a test as to whether the tractor vehicle braked via the at least one spring-type brake cylinder (8) can hold a combination of the tractor vehicle and a trailer at a standstill with unbraked trailer.

10. Electropneumatic equipment according to Claim 6 and any one of Claims 7 to 9, **characterized in that** the at least one third solenoid valve (28a, 28b; 28c, 28d, 28e) and/or the at least one fourth solenoid valve (36) are each formed by one of the following valves or include such a valve:
a) a 3/2-way solenoid valve (28a, 28b; 36; 96),
b) a 2/2-way solenoid valve (28c, 28d; 28e),
c) a combination of a 2/2-way solenoid valve (28e) and a select high valve (84),
d) an excess flow shutoff valve (96).

11. Electropneumatic equipment according to Claim 6, **characterized in that**
a) fourth means for detecting a failure of the first electrical energy accumulator (52) and/or the second electrical energy accumulator (54) are provided, and
b) a control logic implemented in at least one electronic control unit supplied with electrical energy by at least one electrical energy source of the two energy sources (52, 54) independent of one another, which receives signals from the fourth means and which is designed in such a way that
c) in the event of a detected failure of a single electrical energy source (52 or 54) of the two electrical energy sources (52, 54) independent of one another, it controls the electronic parking brake control unit (EPB-ECU) in such a way that the at least one third solenoid valve (28a, 28b; 28c, 28d, 28e) of the third valve device (28) is energized.

12. Electropneumatic equipment according to Claim 11 and any one of Claims 7 to 9, **characterized in that** the control logic is furthermore designed such that in the event of a detected failure of a single electrical energy source (52 or 54) of the two electrical energy sources (52, 54) independent of one another, it controls the electronic parking brake control unit (EPB-ECU) in such a way that the at least one fourth solenoid valve (36) of the fourth valve device is energized.

13. Electropneumatic equipment according to Claim 11 or 12, **characterized in that,** in the event of a failure of the further electrical energy source (52 or 54) of the only two energy sources (52, 54) independent of one another, the electronic parking brake control unit (EPB-ECU) and the at least one third solenoid valve (28a, 28b; 28c, 28d, 28e) of the third valve device (28) are deenergized, whereupon the at least one third solenoid valve (28a, 28b; 28c, 28d, 28e) of the third valve device (28) connects the at least one spring-type brake cylinder (8) to the working output (24) of the pressure-controlled valve (RV).

14. Electropneumatic equipment according to Claim 13 and any one of Claims 7 to 9, **characterized in that** the control logic is designed such that in the event of a failure of a further electrical energy source (52 or 54) of the only two energy sources (52, 54) independent of one another, the at least one fourth solenoid valve (36) of the fourth valve device is deenergized.

15. Electropneumatic equipment according to any one of Claims 4, 5, 11, or 12, **characterized in that** the control logic is implemented in each case in the electronic parking brake control unit (EPB-ECU), the first electronic control unit (ECU1), and in the second electronic control unit (ECU2).

16. Electropneumatic equipment according to any one of the preceding claims, **characterized in that** the pressure-controlled valve (RV) is formed by a relay valve, which is connected to a supply fitting on the at least one compressed air supply (6).

17. Electropneumatic equipment according to Claim 16, **characterized in that** a pneumatic feedback connection (32) is drawn between the working output (24) of the relay valve and the pneumatic control input (20) of the relay valve.

18. Electropneumatic equipment according to Claim 17, **characterized in that** at least one pneumatic throttle element (34) is arranged in the pneumatic feedback connection (32).

19. Electropneumatic equipment according to any one of the preceding claims, **characterized in that** the second valve device (16) includes at least one electrically controlled 2/2-way valve (16a; 16c, 16d; 16e, 16f; 16g), which
a) when energized, assumes a passage position, in which a first fitting is connected to a second fitting and which, when deenergized, assumes a blocking position, in which this connection is blocked, or which
b) when deenergized, assumes a passage position, in which a first fitting is connected to a second fitting, and which, when energized, assumes a blocking position, in which this connection is blocked.

20. Electropneumatic equipment according to Claim 19, **characterized in that** the second valve device (16) only includes an electrically controlled 2/2-way valve (16a), of which a first fitting is connected or connectable to the pneumatic control input (22) of the pressure-controlled valve (RV) and a second fitting is connected or connectable to the further pressure sink (42), and which is electrically controlled by the first electronic control unit (ECU1) and independently thereof by the second electronic control unit (ECU2) or by the two electrical energy sources (52, 54).

21. Electropneumatic equipment according to Claim 19 or 20, **characterized in that** the second valve device (16) includes two electrically controlled 2/2-way valves (16c, 16d; 16e, 16f; 16g) or a single 2/2-way solenoid valve (16a) having two coils, wherein
a) a first 2/2-way valve (16c; 16e) or a first coil of the single 2/2-way solenoid valve (16a) is energized by the first energy source (52) and a second 2/2-way valve (16d; 16f) or a second coil of the single 2/2-way solenoid valve (16a) is energized by the second energy source (54), and wherein
b) the single 2/2-way solenoid valve (16a) or the first 2/2-way valve (16c; 16e) and the second 2/2-way valve (16d; 16f) is interconnected with the pneumatic control input (22) of the pressure-controlled valve (RV) and with the further pressure sink (42; 86, 88; 94; 108) such that the pneumatic control input (22) of the pressure-controlled valve (RV) is connected or connectable to the further pressure sink (42; 86, 88; 94; 108) solely in the event of a failure of both electrical energy sources (52, 54) and otherwise, i.e., in the event of a failure of only one of the two electrical energy sources (52, 54) independent of one another or in the event of both intact electrical energy sources (52, 54) independent of one another, such a connection is blocked.

22. Electropneumatic equipment according to Claim 19, **characterized in that** the second valve device (16) includes at least one electrically controlled 2/2-way valve (16g) which, when deenergized, assumes a passage position, in which a first fitting is connected to a second fitting, and which, when energized, assumes a blocking position, in which this connection is blocked, wherein furthermore a bistable valve (106) is provided as a 2/2-way solenoid valve controlled by the electronic parking brake control unit (EPB-ECU), which is energized by the only two electrical energy sources (52, 54) and which is interconnected with the electrically controlled 2/2-way valve (16g) such that the pneumatic control input (22) of the pressure-controlled valve (RV) is connected to the further pressure sink (108) solely in the event of a failure of both electrical energy sources (52, 54) and otherwise, i.e., in the event of a failure of only one of the two electrical energy sources (52, 54) independent of one another or in the event of both intact electrical energy sources (52, 54) independent of one another, such a connection is blocked.

23. Electropneumatic equipment according to any one of the preceding claims, **characterized in that** the at least one first solenoid valve (11) is formed by a combination of two 2/2-way solenoid valves as an inlet/outlet valve combination.

24. Electropneumatic equipment according to any one of the preceding claims, **characterized in that** the first electronic control unit (ECU1) and the second electronic control unit (ECU2) are each formed by one of the following electronic control units:
a) an electronic control unit (EBS-ECU), which controls or regulates an electronically regulated electropneumatic service brake system (EBS) of the vehicle,
b) an electronic control unit (ECU2), which, on the one hand, represents an evaluation device for signals of a brake value generator of an electropneumatic foot brake module (iFBM) interacting with a brake pedal (80) and which, on the other hand, controls a solenoid valve device, by which a pneumatic control chamber of the electropneumatic foot brake module (iFBM) is aerated or deaerated, using which at least one pneumatic channel of the foot brake module (iFBM) is actuatable,
c) an electronic control unit which controls an electrical steering device of the vehicle,
d) an electronic control unit which controls a driver assistance system of the vehicle,
e) an electronic control unit which controls an autopilot device of the vehicle, using which partially autonomous or autonomous driving is implemented,
f) an electronic control unit which controls a compressed air preparation device for compressed air consumers of the vehicle,
g) an electronic control unit which controls a pneumatic suspension device of the vehicle,
h) an electronic control unit which forms a central vehicle computer of the vehicle.

25. Electropneumatic equipment according to any one of Claims 4, 5, and 11, **characterized in that**
a) the first means for detecting a failure of the electronic parking brake control unit (EPB-ECU), and/or
b) the third means for detecting a failure of the first electronic control unit (ECU1) and/or the second electronic control unit (ECU2), and/or
c) the fourth means for detecting a failure of the first electrical energy accumulator (52) and/or the second electrical energy accumulator (54) include a detection by self-monitoring or a detection by external monitoring.

26. Electropneumatic equipment according to any one of the preceding claims, **characterized in that** at least the electronic parking brake control unit (EPB-ECU), the first valve device (10) including the at least one first solenoid valve (11), and the pressure-controlled valve (RV) are integrated into a shared housing (4) of the parking brake control device (EPB).

27. Electropneumatic equipment according to Claim 26, **characterized in that** the at least one second solenoid valve (16a; 16c, 16d; 16e, 16f; 16g), the at least one third solenoid valve (28a, 28b; 28c, 28d, 28e), and/or the at least one fourth solenoid valve (36) is (are) integrated into the housing (4) of the parking brake control device (EPB) or is (are) flanged onto the housing (4) of the parking brake control device (EPB).

28. Electropneumatic equipment according to any one of the preceding claims, **characterized in that** the first electrical energy source (52) and the second electrical energy source (54) are each decoupled from one another by circuit disconnection diodes (60) and/or by fuses (62) connected in series thereto and/or by relays.

29. Electropneumatic equipment according to any one of the preceding claims, **characterized in that** it includes an electronically regulated electropneumatic service brake system (EBS), in which the service brake pressure is regulated to a target value.

30. Electropneumatic equipment according to any one of the preceding claims, **characterized in that** the two electrical energy sources (52, 54) each supply one electrical or electropneumatic service brake circuit with electrical energy.

31. Vehicle having electropneumatic equipment according to any one of the preceding claims.

## Revendications

1. Equipement (1) électropneumatique comportant
a) un dispositif (2) électropneumatique de frein de stationnement comprenant un dispositif (EPB) électropneumatique de commande de frein de stationnement, au moins un réservoir (6, 102) d'air comprimé et au moins un cylindre (8) de frein pneumatique à ressort accumulateur, dans lequel
b) le dispositif (EPB) électropneumatique de commande de frein de stationnement a un appareil (EPB-ECU) électronique de commande de frein de stationnement, un premier dispositif (10) de vanne comprenant au moins une électrovanne (11) et au moins une vanne (RV) commandée en pression par celle-ci, dispositif (10) de vanne dans lequel la au moins une première électrovanne (11) est commandée par l'appareil (EPB-ECU) électronique de commande de frein de stationnement, dans lequel
c) une entrée (20) pneumatique de commande de la vanne (RV) commandée en pression est reliée à la au moins une première électrovanne (11) et une sortie (24) de travail de la vanne (RV) commandée en pression peut être mise en liaison avec le au moins un cylindre de frein à ressort accumulateur, et dans lequel
d) la au moins une première électrovanne (11) est reliée en outre à au moins un réservoir (6) d'air comprimé et à un puits (40) de pression, dans lequel
e) la au moins une première électrovanne (11) est constituée de manière à relier, en fonction de la commande par l'appareil (EPB-ECU) électronique de commande de frein de stationnement, l'entrée (20) pneumatique de commande de la vanne (RV) commandée en pression au au moins un réservoir (6) d'air comprimé ou au puits (40) de pression, et dans lequel
f) la vanne (RV) commandée en pression est constituée de manière à ce que, lors d'une mise à l'atmosphère de son entrée (20) pneumatique de commande, sa sortie (24) de travail soit mise à l'atmosphère et, lors d'une alimentation en air de son entrée (20) pneumatique de commande, sa sortie (24) de travail soit alimentée en air, ainsi que
g) comportant un deuxième dispositif (16) de vanne ayant au moins une deuxième électrovanne (16 ; 16c, 16d ; 16f ; 16g) et relié à l'entrée (20) pneumatique de commande de la vanne (RV) commandée en pression du premier dispositif (16) de vanne et constitué de manière à relier ou à faire barrage à une telle liaison, en fonction d'une alimentation en courant électrique ou d'une non alimentation en courant électrique de la au moins une deuxième électrovanne (16a ; 16c, 16d ; 16e, 16f ; 16g), l'entrée (20) pneumatique de commande de la vanne (RV) commandée en pression à un autre puits (42 ; 86, 88 ; 94 ; 108) de pression, **caractérisé en ce que**
h) le dispositif (EPB) électropneumatique de commande de frein de stationnement est alimenté en énergie électrique seulement par seulement deux sources (52, 54) d'énergie électrique indépendantes l'une de l'autre, une première source (52) d'énergie électrique et une deuxième source (54) d'énergie électrique, et **en ce que**
i) la au moins une deuxième électrovanne (16a ; 16c, 16d ; 16e, 16f ; 16g) du deuxième dispositif (16) de vanne peut être alimentée en courant électrique ou peut ne pas être alimentée en courant électrique simplement par les deux sources (52, 54) d'énergie électrique indépendantes l'une de l'autre ou par deux appareils (ECU1, ECU2) électroniques de commande indépendants l'une de l'autre, dont un premier appareil (ECU1) électronique de commande et un deuxième appareil (ECU2) électronique de commande est alimenté en énergie électrique par respectivement une autre source (52, 54) d'énergie électrique parmi seulement les deux sources (52, 54) d'énergie électrique indépendantes l'une de l'autre.

2. Equipement électropneumatique suivant la revendication 1, **caractérisé en ce que** les seulement deux sources (52, 54) d'énergie électrique indépendantes l'une de l'autre alimentent respectivement un appareil (ECU1, ECU2) électronique de commande en énergie électrique, à savoir une première source (52) d'énergie électrique, le premier appareil (ECU1) électronique de commande, et une deuxième source (54) d'énergie électrique, le deuxième appareil (ECU2) électronique de commande.

3. Equipement électropneumatique suivant l'une quelconque revendication 1 ou 2, **caractérisé en ce que** le premier appareil (ECU1) électronique de commande et le deuxième appareil (ECU2) électronique de commande sont constitués de manière à ce qu'une défaillance de l'un des appareils (ECU1 ou ECU2) de commande n'influence pas le fonctionnement de l'autre appareil (ECU1 ou ECU2) de commande.

4. Equipement électropneumatique suivant l'une quelconque des revendications précédentes, **caractérisé en ce que**
a) il est prévu des premiers moyens de détection d'une défaillance de l'appareil (EPB-ECU) électronique de commande de frein de stationnement et
b) il est prévu des deuxièmes moyens de détection d'un état de marche du véhicule selon qu'il est en marche ou à l'arrêt, les premiers moyens et les deuxièmes moyens étant alimentés en énergie électrique par au moins une source (52, 54) d'énergie électrique parmi les deux sources (52, 54) d'énergie indépendantes l'une de l'autre, ainsi que
c) une logique de commande, qui est mise en œuvre dans au moins un appareil (ECU1, ECU2, EPB-ECU) électronique de commande et qui reçoit des signaux des premiers moyens et des deuxièmes moyens et qui est constituée de manière,
d) à la détection d'un arrêt du véhicule et à la détection d'une défaillance de l'appareil (EPB-ECU) électronique de frein de stationnement, à commander le premier appareil (ECU1) électronique de commande et/ou le deuxième (ECU2) électronique de commande de manière à ce que celui-ci (ceux-ci) commande(nt) la au moins une deuxième électrovanne (16a ; 16c, 16d ; 16e, 16f ; 16g) du deuxième dispositif (16) de vanne afin de relier l'entrée (20) pneumatique de commande de la vanne (RV) commandée en pression, du dispositif (EPB) de commande de frein de stationnement à l'autre puits (42 ; 86, 88 ; 94 ; 108) de pression.

5. Equipement électropneumatique suivant l'une quelconque des revendications précédentes, **caractérisé en ce que**
a) il est prévu des premiers moyens de détection d'une défaillance de l'appareil (EPB-ECU) électronique de commande de frein de stationnement, et
b) des deuxièmes moyens de détection d'un état de marche du véhicule en ce qui concerne la marche ou l'arrêt, et
c) des troisièmes moyens de détection d'une défaillance du premier appareil (ECU1) électronique de commande et/ou du deuxième appareil (ECU2) électronique de commande, dans lequel les premiers moyens, les deuxièmes moyens et les troisièmes moyens sont alimentés en énergie électrique par au moins une source d'énergie électrique parmi les deux sources (52, 54) d'énergie indépendantes l'une de l'autre, ainsi que
d) une logique de commande, qui est mise en œuvre dans au moins un appareil (ECU1, ECU2, EPB-ECU) électronique de commande alimenté en énergie électrique par au moins une source (52, 54) d'énergie électrique parmi les deux sources (52, 54) d'énergie indépendantes l'une de l'autre et qui reçoit des signaux des premiers moyens, des deuxièmes moyens et des troisièmes moyens et qui est constituée de manière
e) à commander, lors de la détection d'un arrêt du véhicule, et lors de la détection d'une défaillance d'une part du premier appareil (ECU1) électronique de commande ou du deuxième appareil (ECU2) électronique de commande et d'autre part de l'appareil (EPB-ECU) électronique de commande de frein de stationnement, l'appareil (ECU1 ou ECU2) électronique de commande restant intact parmi les deux appareils (ECU1, ECU2) électronique de commande de manière à ce que cet appareil (ECU1 ou ECU2) électronique de commande restant intact commande la au moins une deuxième électrovanne (16a ; 16c, 16d ; 16e, 16f ; 16g) du deuxième dispositif (16) de vanne afin de relier l'entrée (20) pneumatique de commande de la vanne (RV) commandée en pression à l'autre puits (42, 86, 88 ; 94 ; 108) de pression.

6. Equipement électropneumatique suivant l'une quelconque des revendications précédentes, **caractérisé en ce qu'**il est prévu un troisième dispositif (28) de vanne, qui a au moins une troisième électrovanne (28a, 28b ; 28c, 28d ; 28e) commandée par l'appareil (EPB-ECU) électronique de commande de frein de stationnement et qui est reliée à au moins un réservoir (6) d'air comprimé ainsi qu'à au moins un cylindre (8) de frein à ressort accumulateur et qui est constitueé de manière à relier, lorsque la au moins une troisième électrovanne (28a, 28b ; 28c, 28d ; 28e) n'est pas alimentée en courant électrique par l'appareil (EPB-ECU) électronique de commande de frein de stationnement, le au moins un cylindre (8) de frein à ressort accumulateur à la sortie (24) de travail de la vanne (RV) commandée en pression et faire obstacle à cette liaison, lorsque la au moins une troisième électrovanne (28a, 28b ; 28c, 28d ; 28e) est alimentée en courant électrique par l'appareil (EBP-ECU) électronique de commande de frein de stationnement et ensuite à relier le au moins un cylindre (8) de frein à ressort accumulateur au au moins un réservoir (620) d'air comprimé ou à faire obstacle à la pression dans le au moins un cylindre (8) de frein à ressort accumulateur.

7. Equipement électropneumatique suivant l'une quelconque des revendications précédentes, **caractérisé en ce qu'**il est prévu un quatrième dispositif de vanne, qui a au moins une quatrième électrovanne (36) commandée par l'appareil (EPB-ECU) électronique de commande de frein de stationnement et qui est reliée à un raccord (68) pneumatique de commande d'un module (TCM) électropneumatique de remorque, à au moins un réservoir (6) d'air comprimé ainsi qu'à la sortie (24) de travail de la vanne (RV) commandée en pression et qui est constituée de manière à ménager, lorsque la au moins une quatrième électrovanne (36) n'est pas alimentée en courant par l'appareil (EPB-ECU) électronique de commande de frein de stationnement, une liaison entre le raccord (68) pneumatique de commande du module (TCM) électropneumatique de commande de remorque à la sortie (24) de travail de la vanne (RV) commandée en pression et, lorsque la au moins une quatrième électrovanne est alimentée en courant électrique à faire obstacle à une telle liaison et à ménager une liaison entre le au moins un réservoir (6) d'air comprimé et le raccord (68) pneumatique de commande du module (TCM) électropneumatique de commande de remorque.

8. Equipement électropneumatique suivant la revendication 7, **caractérisé en ce que** le module (TCM) électropneumatique de commande de remorque a un raccord (70) pneumatique pour un dispositif de frein pneumatique ou électropneumatique d'une remorque du véhicule et est constitué de manière à mettre à l'atmosphère, lorsque son raccord (68) pneumatique de commande est alimenté en air, le raccord (70) pneumatique et, lorsque son raccord (68) pneumatique de commande est mis à l'atmosphère, à alimenter en air le raccord (70) pneumatique.

9. Equipement électropneumatique suivant l'une quelconque des revendications 7 ou 8, **caractérisé en ce que** la au moins une quatrième électrovanne (36) est formée d'une électrovanne de test, qui est prévue pour un test, sur le point de savoir si le véhicule tracteur freiné par le au moins un cylindre (8) de frein à ressort accumulateur peut maintenir à l'arrêt une combinaison du véhicule tracteur et d'une remorque alors que la remorque n'est pas freinée.

10. Equipement électropneumatique suivant la revendication 6 et l'une quelconque des revendications 7 ou 9, **caractérisé en ce que** la au moins une troisième électrovanne (28a, 28b ; 28c, 28d ; 28e) et/ou la au moins une quatrième électrovanne sont formées chacune par l'une des vannes suivantes ou comportent une vanne de ce genre :
a) une électrovanne (28a, 28b ; 36 ; 96) à 3/2 voies,
b) une électrovanne (28c, 28d ; 28e) à 2/2 voies,
c) une combinaison d'une électrovanne (38e) à 2/2 voies et d'une vanne (84) select-high,
d) une vanne (96) d'arrêt automatique en cas de rupture de tuyau.

11. Equipement électropneumatique suivant la revendication 6, **caractérisé**
a) **en ce qu'**il est prévu des quatrièmes moyens de détection d'une défaillance du premier accumulateur (52) d'énergie électrique et/ou du deuxième accumulateur (54) d'énergie, ainsi que
b) une logique de commande, qui est mise en œuvre dans au moins un appareil électronique de commande alimenté en énergie électrique par au moins une source d'énergie électrique parmi les deux sources (52, 54) d'énergie indépendantes l'une de l'autre et qui reçoit des signaux des quatrièmes moyens et qui est constituée, de manière
c) lors de la détection d'une défaillance d'une source (52 ou 54) d'énergie électrique individuelle parmi les deux sources (52, 54) d'énergie électrique indépendantes l'une de l'autre, à commander l'appareil (EPB-ECU) électronique de commande de frein de stationnement de manière à alimenter en courant électrique la au moins une troisième électrovanne (28a, 28b ; 28c, 28d ; 28e) du troisième dispositif (28) de vanne.

12. Equipement électropneumatique suivant la revendication 11, et l'une quelconque des revendications 7 à 9, **caractérisé en ce que** la logique de commande est constituée en outre de manière à commander, lors d'une détection d'une défaillance d'une source (52 ou 54) d'énergie électrique individuelle parmi les deux sources (52, 54) d'énergie électrique indépendantes l'une de l'autre, l'appareil (EPB-ECU) électronique de commande de frein de stationnement de manière à alimenter en courant électrique la au moins une quatrième électrovanne (36) du quatrième dispositif de vanne.

13. Equipement électropneumatique suivant l'une quelconque des revendications 11 ou 12, **caractérisé en ce que**, s'il se produit une défaillance de l'autre source (52 ou 54) d'énergie électrique des seulement deux sources (52, 54) d'énergie indépendante l'une de l'autre l'appareil (EBP-ECU) électronique de commande de frein de stationnement ainsi que la au moins troisième électrovanne (28a, 28b ; 28c, 28d ; 28e) du troisième dispositif (28) de vanne ne reçoivent plus de courant électrique, après quoi la au moins une troisième électrovanne (28a, 28b ; 28c, 28d ; 28e) du troisième dispositif (28) de vanne relie le au moins un cylindre (8) de frein à ressort accumulateur à la sortie (24) de travail de la vanne (RV) commandée en pression.

14. Equipement électropneumatique suivant la revendication 13 et l'une quelconque des revendications 7 ou 9, **caractérisé en ce que** la logique de commande est constituée de manière à ce que, s'il se produit une défaillance d'une autre source (52 ou 54) d'énergie électrique parmi les seulement deux sources (52, 54) indépendantes l'une de l'autre, la au moins une quatrième électrovanne (36) du quatrième dispositif de vanne ne reçoit plus de courant électrique.

15. Equipement électropneumatique suivant l'une quelconque des revendications 4, 5, 11 ou 12, **caractérisée en ce que** la logique de commande est mise en œuvre respectivement dans l'appareil (EPB-ECU) électronique de commande de frein de stationnement, dans le premier appareil (ECU1) électronique de commande et dans le deuxième (ECU2) électronique de commande.

16. Equipement électropneumatique suivant l'une quelconque des revendications précédentes, **caractérisée en ce que** la vanne (RV) commandée en pression est formée d'une vanne relais, qui est relié par un raccord au au moins un réservoir (6) d'air comprimé.

17. Equipement électropneumatique suivant la revendication 16, **caractérisé en ce qu'**une liaison (32) pneumatique de réaction est tirée entre la sortie (24) de travail de la vanne relais et l'entrée (20) pneumatique de commande de la vanne relais.

18. Equipement électropneumatique suivant la revendication 17, **caractérisé en ce qu'**au moins un élément (34) d'étranglement pneumatique est monté dans la liaison (32) pneumatique de réaction.

19. Equipement électropneumatique suivant l'une quelconque des revendications précédentes, **caractérisé en ce que** le deuxième dispositif (16) de vanne comporte au moins une vanne ((16a ; 16b, 16d ; 16e ; 16f ; 16g) à 2/2 voies commandée électriquement, qui
a) alimentée en courant prend une position de passage, dans laquelle un premier raccord est relié à un deuxième raccord et qui, non alimentée en courant, prend une position de blocage, dans laquelle cette liaison est bloquée ou qui
b) non alimentée en courant prend une position de passage, dans laquelle un premier raccord est relié à un deuxième raccord, et qui alimentée en courant prend une position de blocage, dans laquelle cette liaison est bloquée.

20. Equipement électropneumatique suivant la revendication 19, caractérisé en ce le deuxième dispositif (16) de vanne comporte seulement une vanne (16a) à 2/2 voies commandée électriquement, de laquelle un premier raccord est relié ou peut l'être à l'entrée (22) pneumatique de commande de la vanne (RV) commandée en pression et un deuxième raccord à l'autre puits (42) de pression et qui est commandé électriquement par le premier appareil (ECU1) électronique de commande et indépendamment de cela par le deuxième appareil électronique de commande ou par les deux sources (52, 54) d'énergie électrique.

21. Equipement électropneumatique suivant l'une quelconque des revendications 19 ou 20, **caractérisé en ce que** le deuxième dispositif (16) de vanne comporte deux vannes (16c ; 16d ; 16e ; 16f ; 16g) à 2/2 voies commandées électriquement ou une électrovanne unique (16a) à 2/2 voies ayant deux bobines, dans lequel
a) une première vanne (16c ; 16^{e}) à 2/2 ou une première bobine de l'électrovanne unique à 2/2 voies est alimentée en courant par la première source (52) d'énergie et une deuxième vanne (16d ; 16f) à 2/2 voies ou une deuxième bobine de l'électrovanne unique (16a) à 2/2 voies est alimentée en courant par la deuxième source (54) d'énergie et dans lequel
b) l'électrovanne unique (16a) à 2/2 voies ou la première vanne (16c ; 16e) à 2/2 voies et la deuxième vanne (16d ; 16f) à 2/2 voies sont reliées à l'entrée (22) pneumatique de commande de la vanne (RV) commandée en pression et à l'autre puits (42 ; 86, 88 ; 94 ; 108) de pression de manière à ce que, seulement lors d'une défaillance des deux sources (52, 54) d'énergie électrique, l'entrée (22) pneumatique de commande de la vanne (RV) commandée en pression soit reliée à l'autre puits (42 ; 86, 88 ; 94 ; 108) de pression ou puisse l'être et sinon, c'est-à-dire s'il se produit une défaillance de l'une des deux sources (52, 54) d'énergie électrique indépendantes l'une de l'autre ou si les deux sources (52, 54) d'énergie électrique indépendantes l'une de l'autre sont intactes, une liaison de ce genre est bloquée.

22. Equipement électropneumatique suivant la revendication 19, **caractérisé, en ce que** le deuxième dispositif (16)de vanne comporte au moins une vanne (16g) à 2/2 voies commandée électriquement, qui non alimentée en courant prend une position de passage, dans laquelle un premier raccord est relié à un deuxième raccord et qui, alimentée en courant, prend une position de blocage, dans laquelle cette liaison est bloquée, dans lequel en outre il est prévu une vanne (106) bistable comme électrovanne à 2/2 voies commandée par l'appareil (EPB-ECU) électronique de commande de frein de stationnement, laquelle est alimentée en courant par les seulement deux sources (52, 54) d'énergie électrique et laquelle est reliée à la vanne (16g) à 2/2 voies commandée électriquement de manière à ce que, seulement s'il se produit une défaillance des deux sources (52, 54) d'énergie électrique, l'entrée (22) pneumatique de commande de la vanne (RV) commandée en pression soit reliée à l'autre puits (108) de pression et sinon, c'est-à-dire lors d'une défaillance de seulement l'une des deux sources (52, 54) d'énergie électrique indépendantes l'une de l'autre ou si les deux sources (52, 54) d'énergie électrique indépendantes l'une de l'autre sont intactes, une liaison de ce genre est bloquée.

23. Equipement électropneumatique suivant l'une quelconque des revendications précédentes, **caractérisé en ce que** la au moins une première électrovanne (11) est formée d'une combinaison de deux électrovannes à 2/2 voies comme combinaison de vanne d'entrée / vanne de sortie.

24. Equipement électropneumatique suivant l'une quelconque des revendications précédentes, **caractérisé en ce que** le premier appareil (ECU1) électronique de commande et le deuxième appareil (ECU2) électronique de commande sont formés chacun de l'un des appareils de commande suivant :
a) un appareil (EBS-ECU) électronique de commande, qui commande ou règle un système (EBS) électropneumatique de frein de service réglé électroniquement du véhicule,
b) un appareil (ECU2) électronique de commande, qui représente d'une part, un dispositif d'exploitation de signaux d'un indicateur de valeur de freinage, agissant ensemble avec une pédale (80) de frein, d'une module (iFBM) électropneumatique de frein au pied et qui, d'autre part commande un dispositif d'électrovanne, par lequel une chambre pneumatique de commande du module (iFBM) électropneumatique de frein au pied est alimentée en air ou mise à l'atmosphère, par lequel au moins un conduit pneumatique du module (iFBM) de frein au pied peut être actionné,
c) un appareil électronique de commande, qui commande un dispositif électrique de conduite du véhicule,
d) un appareil électronique de commande, qui commande un système d'assistance à la conduite du véhicule,
e) un appareil électronique de commande, qui commande un dispositif d'autopilote du véhicule, par lequel une marche autonome ou autonome en partie est réalisée,
f) un dispositif électronique de commande, qui commande un dispositif de traitement d'air comprimé pour des consommateurs d'air comprimé du véhicule,
g) un appareil électronique de commande, qui commande un dispositif de suspension pneumatique du véhicule,
h) un appareil électronique de commande, qui forme un ordinateur central du véhicule.

25. Equipement électropneumatique suivant l'une quelconque des revendications 4, 5 et 11, **caractérisé en ce que**
a) les premiers moyens de détection d'une défaillance de l'appareil (EPB-ECU) électronique de commande de frein de stationnement et/ou
b) les troisièmes moyens de détection d'une défaillance du premier appareil (ECU1) électronique de commande et/ou du deuxième appareil (ECU2) électronique de commande et/ou
c) les quatrièmes moyens de détection d'une défaillance du premier accumulateur (52) d'énergie électrique ou le deuxième accumulateur (54) d'énergie électrique comportent une détection par contrôle propre ou une détection par contrôle extérieur.

26. Equipement électropneumatique suivant l'une quelconque des revendications précédentes, **caractérisé en ce qu'**au moins l'appareil (EPB-ECU) électronique de commande de frein de stationnement, le premier dispositif (10) de vanne, ensemble avec la au moins une première électrovanne (11) et la vanne (RV) commandée en pression sont intégrés dans un boîtier (4) de dispositif (EPB) de commande de frein de stationnement.

27. Equipement électropneumatique suivant la revendication 26, **caractérisé en ce que** la au moins une deuxième électrovanne (16a ; 16c, 16d, 16e, 16f ; 16g), la au moins une troisième électrovanne (28a, 28b ; 28c, 28d, 28e) et/ou la moins une quatrième électrovanne (36) est (sont) intégrée(s) dans le boîtier (4) du dispositif (EPB) de commande de frein de stationnement ou est (sont) bridée(s) sur le boîtier (4) du dispositif (EPB) de commande de frein de stationnement.

28. Equipement électropneumatique suivant l'une des revendications précédentes, caractérisé en ce la première source (52) d'énergie électrique et la deuxième source (54) d'énergie électrique sont découplées l'une de l'autre par des diodes (60) de séparation de circuit et/ou par des fusibles (62) montés en série avec elles et/ou par des relais.

29. Equipement électropneumatique suivant l'une des revendications précédentes, **caractérisée en ce qu'**il comporte un système (EBS) électropneumatique de frein de service régulé électroniquement, dans lequel la pression de frein de service est réglée à une valeur de consigne.

30. Equipement électropneumatique suivant l'une des revendications précédentes, **caractérisé en ce que** les deux sources (52, 54) d'énergie électrique alimentent chacune en énergie électrique un circuit électrique ou électropneumatique de frein de service.

31. Véhicule ayant un équipement électropneumatique suivant l'une des revendications précédentes.
